# EUROPEAN PATENT APPLICATION

(11) **EP 4 321 590 A1**
(43) Date of publication of application: **14.02.2024**
(21) Application number: 22791758.0
(22) Date of filing: 20.04.2022
(51) Int. Cl.: C09K 3/18

(54) **SURFACE TREATMENT AGENT**

(30) Priority: 20.04.2021 JP 2021071009
(71) Applicant: DAIKIN INDUSTRIES, LTD., Osaka-shi, Osaka 530-0001 (JP)
(72) Inventor: WATANABE, Yusuke, Osaka-shi, Osaka 530-0001 (JP); OZAWA, Kaori, Osaka-shi, Osaka 530-0001 (JP); MITSUHASHI, Hisashi, Osaka-shi, Osaka 530-0001 (JP); YAMASHITA, Tsuneo, Osaka-shi, Osaka 530-0001 (JP); GOTO, Akihiro, Osaka-shi, Osaka 530-0001 (JP); KUBOTA, Hiroki, Osaka-shi, Osaka 530-0001 (JP)
(74) Representative: Hoffmann Eitle
(86) International application number: PCT/JP2022/018281
(87) International publication number: WO 2022/224987

(57) **Abstract**

The present invention provides a surface-treating agent comprising a fluoropolyether group-containing silane compound (A) represented by the following formula (1) and a fluoropolyether group-containing silane compound (B) represented by the following formula (2).

**R^{F1}_{α}-X^{A}-R^{S1}_{β}** **(1)**

**R^{S2}_{γ}-X^{B}-R^{F2}-X^{B}-R^{S2}_{γ}** **(2)**

## Description

### Technical Field

The present disclosure relates to a surface-treating agent.

### Background Art

Certain types of fluorine-containing silane compounds are known to be capable of providing excellent waterrepellency, oil-repellency, antifouling property, and the like when used in surface treatment of a substrate. A layer obtained from a surface-treating agent containing a fluorine-containing silane compound (hereinafter, also referred to as a "surface-treating layer") is applied as a so-called functional thin film to a large variety of substrates such as glass, plastics, fibers, sanitary articles, and building materials (Patent Literature 1).

### Citation List

### Patent Literature

Patent Literature 1: JP 2014-218639 A

### Summary of Invention

### Technical Problem

The fluorine-containing silane compound described in Patent Literature 1 can provide a surface-treating layer having an excellent function, but a surface-treating layer having higher abrasion durability is required.

An object of the present disclosure is to provide a surface-treating agent capable of forming a surface-treating layer having higher abrasion durability.

### Solution to Problem

The present disclosure includes the following embodiments.
[1] A surface-treating agent comprising:
   a fluoropolyether group-containing silane compound (A) represented by the following formula (1):

   R^{F1}_{α}-X^{A}-R^{S1}_{β} (1)

   wherein
   R^{F1} is each independently at each occurrence Rf¹-R^{FA}-O_{q}-;
   Rf¹ is each independently at each occurrence a C₁₋₁₆ alkyl group optionally substituted with one or more fluorine atoms;
   R^{FA} is each independently at each occurrence a fluoropolyether group having a branched structure;
   q is each independently at each occurrence 0 or 1;
   R^{S1} is each independently at each occurrence a Si atomcontaining group having a hydroxyl group or a hydrolyzable group;
   X^{A} is each independently a single bond or a di- to decavalent organic group;
   α is an integer of 1 to 9; and
   β is an integer of 1 to 9;
      and
   a fluoropolyether group-containing silane compound (B) represented by the following formula (2):

      R^{S2}_{γ}-X^{B}-R^{F2}-X^{B}-R^{S2}_{γ} (2)

      wherein
      R^{F2} is -Rf²ₚ-R^{FB}-O_{q}-;
      Rf² is a C₁₋₆ alkylene group optionally substituted with one or more fluorine atoms;
      R^{FB} is each independently at each occurrence a linear fluoropolyether group;
      p is 0 or 1;
      q is each independently at each occurrence 0 or 1;
      R^{S2} is each independently at each occurrence a Si atomcontaining group having a hydroxyl group or a hydrolyzable group;
      X^{B} is each independently a single bond or a di- to decavalent organic group; and
      γ is each independently an integer of 1 to 9.
[2] The surface-treating agent according to [1], wherein
   R^{FA} is each independently at each occurrence a group represented by the following formula and having at least one branched structure:

   - (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-

   wherein
   a, b, c, d, e, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and
   X^{F} is each independently at each occurrence a hydrogen atom, a fluorine atom, or a chlorine atom;
      and
   R^{FB} is each independently at each occurrence a linear group represented by the following formula:

      - (OC₆F₁₂)ₐ-(OC₅F₁₀)_{b}-(OC₄F₈)_{c}-(OC₃X^{F}₆)_{d}-(OC₂F₄)ₑ-(OCF₂)_{f}-

      wherein
      a, b, c, d, e, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and
      X^{F} is each independently at each occurrence a hydrogen atom, a fluorine atom, or a chlorine atom.
[3] The surface-treating agent according to [1] or [2], wherein
   R^{FA} is each independently at each occurrence a group represented by the following formula (f1), (f2), (f3), (f4), (f5), or (f6) and having at least one branched structure:

      - (OC₃F₆)_{d}-(OC₂F₄)ₑ- (f1)

      wherein d is an integer of 1 to 200, and e is 0 or 1;

      -(OC₄F₈)_{c}-(OC₃F₆)_{d}-(OC₂F₄)ₑ-(OCF₂)_{f}- (f2)

      wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with the subscript c, d, e, or f is not limited in the formula;

      -(R⁶-R⁷)_{g}- (f3)

      wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups selected from these groups; and
   g is an integer of 2 to 100;

      -(R⁶-R⁷)_{g}-R^{r}-(R^{7'}-R^{6'})_{g'}- (f4)

      wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups independently selected from these groups;
   R⁶' is OCF₂ or OC₂F₄;
   R⁷' is a group selected from OC₂F₄, OC₃F₆, OC₄F₈, OC₅F₁₀, and OC₆F₁₂, or is a combination of two or three groups independently selected from these groups;
   g is an integer of 2 to 100;
   g' is an integer of 2 to 100; and
   R^{r} is any of the following: 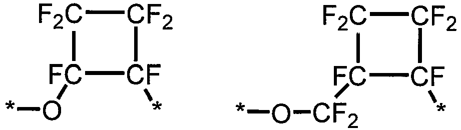 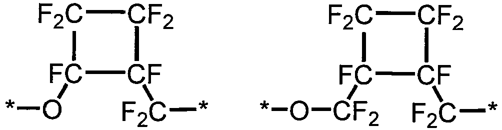 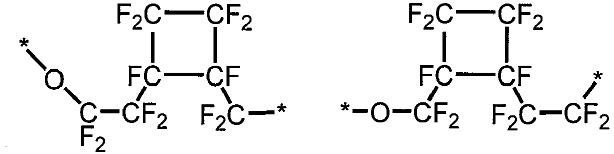 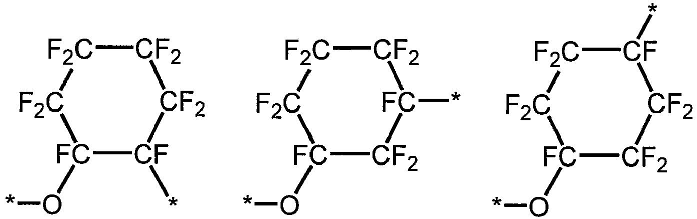 wherein * represents a binding position;

      -(OC₆F₁₂) ₐ-(OC₅F₁₀)_{b}-(OC₄F₈)_{c}-(OC₃F₆)_{d}-(OC₂F₄)ₑ-(OCF₂)_{f}- (f5)

      wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)

      wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.
[4] The surface-treating agent according to any one of [1] to [3], wherein
   R^{FB} is each independently at each occurrence a linear group represented by the following formula (f1), (f2), (f3), (f4), (f5), or (f6):

      -(OC₃F₆)_{d}-(OC₂F₄)ₑ- (f1)

      wherein d is an integer of 1 to 200, and e is 0 or 1;

      - (OC₄F₈)_{c}-(OC₃F₆)_{d}-(OC₂F₄)ₑ-(OCF₂)_{f}- (f2)

      wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with the subscript c, d, e, or f is not limited in the formula;

      - (R⁶-R⁷)_{g}- (f3)

      wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups selected from these groups; and
   g is an integer of 2 to 100;

      -(R⁶-R⁷)_{g}-R^{r}-(R⁷'-R⁶')_{g'}- (f4)

      wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups independently selected from these groups;
   R⁶' is OCF₂ or OC₂F₄;
   R⁷' is a group selected from OC₂F₄, OC₃F₆, OC₄F₈, OC₅F₁₀, and OC₆F₁₂, or is a combination of two or three groups independently selected from these groups;
   g is an integer of 2 to 100;
   g' is an integer of 2 to 100; and
   R^{r} is any of the following: 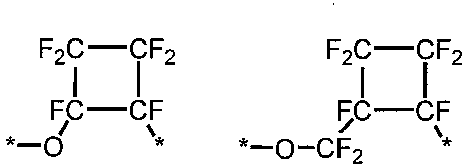 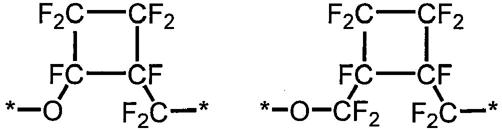 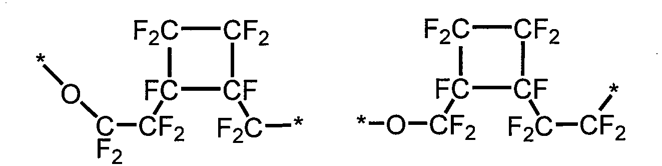 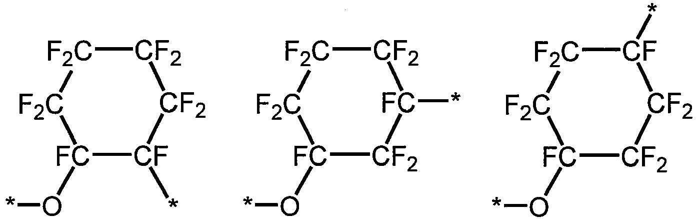 wherein * represents a binding position;

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

      wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)

      wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.
[5] The surface-treating agent according to any one of [1] to [4], wherein
   R^{FA} is each independently at each occurrence a group represented by the following formula (f1a):

   - (OCF(CF₃)CF₂)_{d}-(OCF(CF₃))ₑ- (f1a)

   wherein d is an integer of 1 to 200, and e is 0 or 1.
[6] The surface-treating agent according to any one of [1] to [5], wherein
   R^{FB} is each independently at each occurrence a group represented by the following formula (f2b):

      -(OCF₂CF₂CF₂CF₂)_{c}-(OCF₂CF₂CF₂)_{d}-(OCF₂CF₂)ₑ-(OCF₂)_{f}- (f2b)

      wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with the subscript c, d, e, or f is not limited in the formula.
[7] The surface-treating agent according to any one of [1] to [6], wherein
   R^{S1} and R^{S2} are each independently at each occurrence a group represented by the following formula (S1), (S2), (S3), (S4), or (S5):

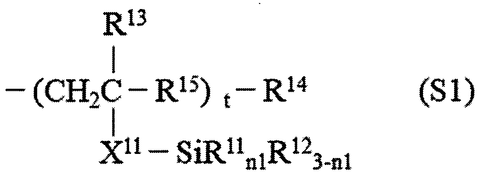

   -SiR¹¹ₙ₁R¹²₃₋ₙ₁ (S2)

   - SiR^{a1}ₖ₁R^{b1}ₗ₁R^{c1}ₘ₁ (S3)

   -CR^{d1}ₖ₂R^{e1}ₗ₂R^{f1}ₘ₂ (S4)

   -NR^{g1}R^{h1} (S5)

   wherein
   R¹¹ is each independently at each occurrence a hydroxyl group or a hydrolyzable group;
   R¹² is each independently at each occurrence a hydrogen atom or a monovalent organic group;
   n1 is each independently an integer of 0 to 3 for each (SiR¹¹ₙ₁R¹²₃₋ₙ₁) unit;
   X¹¹ is each independently at each occurrence a single bond or a divalent organic group;
   R¹³ is each independently at each occurrence a hydrogen atom or a monovalent organic group;
   R¹⁴ is each independently at each occurrence a hydrogen atom, a halogen atom, or -X¹¹-SiR¹¹ₙ₁R¹²₃₋ₙ₁;
   R¹⁵ is each independently at each occurrence a single bond, an oxygen atom, an alkylene group having 1 to 6 carbon atoms, or an alkyleneoxy group having 1 to 6 carbon atoms;
   t is each independently at each occurrence an integer of 2 or more;
   R^{a1} is each independently at each occurrence -Z¹-SiR²¹ₚ₁R²²_{q1}R²³ᵣ₁ ;
   Z¹ is each independently at each occurrence an oxygen atom or a divalent organic group;
   R²¹ is each independently at each occurrence -Z¹'-SiR²¹'_{p1'}R^{22q}_{q1'}R²³_{r1'};
   R²² is each independently at each occurrence a hydroxyl group or a hydrolyzable group;
   R²³ is each independently at each occurrence a hydrogen atom or a monovalent organic group;
   p1 is each independently at each occurrence an integer of 0 to 3;
   q1 is each independently at each occurrence an integer of 0 to 3;
   r1 is each independently at each occurrence an integer of 0 to 3;
   the sum of p1, q1, and r1 is 3 in the SiR²¹ₚ₁R²²_{q1}R²³ᵣ₁ unit;
   Z¹' is each independently at each occurrence an oxygen atom or a divalent organic group;
   R²¹' is each independently at each occurrence -Z¹"-SiR²²"_{q1"}R²³"_{r1"};
   R²²' is each independently at each occurrence a hydroxyl group or a hydrolyzable group;
   R²³' is each independently at each occurrence a hydrogen atom or a monovalent organic group;
   p1' is each independently at each occurrence an integer of 0 to 3;
   q1' is each independently at each occurrence an integer of 0 to 3;
   r1' is each independently at each occurrence an integer of 0 to 3;
   the sum of p1', q1', and r1' is 3 in the SiR²¹'_{p1'}R²²'_{q1'}R²³'_{r1'} unit;
   Z¹" is each independently at each occurrence an oxygen atom or a divalent organic group;
   R²²" is each independently at each occurrence a hydroxyl group or a hydrolyzable group;
   R²³" is each independently at each occurrence a hydrogen atom or a monovalent organic group;
   q1" is each independently at each occurrence an integer of 0 to 3;
   r1" is each independently at each occurrence an integer of 0 to 3;
   the sum of q1" and r1" is 3 in the SiR²²"_{q1"}R²³"_{r1"} unit;
   R^{b1} is each independently at each occurrence a hydroxyl group or a hydrolyzable group;
   R^{c1} is each independently at each occurrence a hydrogen atom or a monovalent organic group;
   k1 is each independently at each occurrence an integer of 0 to 3;
   l1 is each independently at each occurrence an integer of 0 to 3;
   m1 is each independently at each occurrence an integer of 0 to 3;
   the sum of k1, l1, and m1 is 3 in the SiR^{a1}ₖ₁R^{b1}₁₁R^{c1}ₘ₁ unit;
   R^{d1} is each independently at each occurrence -Z²-CR³¹p₂R³²q₂R³³ᵣ₂ ;
   Z² is each independently at each occurrence a single bond, an oxygen atom, or a divalent organic group;
   R³¹ is each independently at each occurrence -Z²'-CR³²'_{q2'}R³³'_{r2'};
   R³² is each independently at each occurrence -Z³-SiR³⁴ₙ₂R³⁵₃₋ₙ₂ ;
   R³³ is each independently at each occurrence a hydrogen atom, a hydroxyl group, or a monovalent organic group;
   p2 is each independently at each occurrence an integer of 0 to 3;
   q2 is each independently at each occurrence an integer of 0 to 3;
   r2 is each independently at each occurrence an integer of 0 to 3;
   the sum of p2, q2, and r2 is 3 in the SiR³¹ₚ₂R³²_{q2}R³³ᵣ₂ unit;
   Z²' is each independently at each occurrence a single bond, an oxygen atom, or a divalent organic group;
   R³²' is each independently at each occurrence -Z³-SiR³⁴ₙ₂R³⁵₃₋ₙ₂ ;
   R³³' is each independently at each occurrence a hydrogen atom, a hydroxyl group, or a monovalent organic group;
   q2' is each independently at each occurrence an integer of 0 to 3;
   r2' is each independently at each occurrence an integer of 0 to 3;
   the sum of q2' and r2' is 3 in the SiR³²'_{q2'}R³³'_{r2'} unit;
   Z³ is each independently at each occurrence a single bond, an oxygen atom, or a divalent organic group;
   R³⁴ is each independently at each occurrence a hydroxyl group or a hydrolyzable group;
   R³⁵ is each independently at each occurrence a hydrogen atom or a monovalent organic group;
   n2 is each independently at each occurrence an integer of 0 to 3;
   R^{e1} is each independently at each occurrence -Z³-SiR³⁴ₙ₂R³⁵₃₋ₙ₂ ;
   R^{f1} is each independently at each occurrence a hydrogen atom, a hydroxyl group, or a monovalent organic group;
   k2 is each independently at each occurrence an integer of 0 to 3;
   l2 is each independently at each occurrence an integer of 0 to 3;
   m2 is each independently at each occurrence an integer of 0 to 3;
   the sum of k2, l2, and m2 is 3 in the CR^{d1}ₖ₂R^{e1}₁₂R^{f1}ₘ₂ unit;
   R^{g1} and R^{h1} are each independently at each occurrence - Z⁴-SiR¹¹ₙ₁R¹²₃₋ₙ₁, -Z⁴-SiR^{a1}ₖ₁Rb¹ₗ₁R^{c1}ₘ₁, or -Z⁴-CR^{d1}ₖ₂R^{e1}₁₂R^{f1}ₘ₂; and
   Z⁴ is each independently at each occurrence a single bond, an oxygen atom, or a divalent organic group,
   provided that in the formulae (S1), (S2), (S3), (S4), and (S5), at least one Si atom to which a hydroxyl group or a hydrolyzable group is bonded is present.
[8] The surface-treating agent according to any one of [1] to [7], wherein
   R^{S1} and R^{S2} are each independently at each occurrence a group represented by the following formula (S1), (S3), (S4), or (S5):

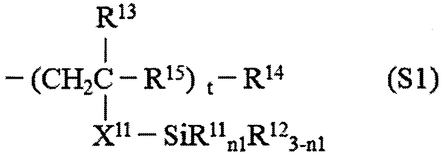

   - SiR^{a1}ₖ₁R^{b1}ₗ₁R^{c1}ₘ₁ (S3)

   - CR^{d1}ₖ₂R^{e1}ₗ₂R^{f1}ₘ₂ (S4)

   - NR^{g1}R^{h1} (S5)

   wherein
   R¹¹ is each independently at each occurrence a hydroxyl group or a hydrolyzable group;
   R¹² is each independently at each occurrence a hydrogen atom or a monovalent organic group;
   n1 is each independently an integer of 0 to 3 for each (SiR¹¹ₙ₁R¹²₃₋ₙ₁) unit;
   X¹¹ is each independently at each occurrence a single bond or a divalent organic group;
   R¹³ is each independently at each occurrence a hydrogen atom or a monovalent organic group;
   R¹⁴ is each independently at each occurrence a hydrogen atom, a halogen atom, or -X¹¹-SiR¹¹ₙ₁R¹²₃₋ₙ₁;
   R¹⁵ is each independently at each occurrence a single bond, an oxygen atom, an alkylene group having 1 to 6 carbon atoms, or an alkyleneoxy group having 1 to 6 carbon atoms;
   t is each independently at each occurrence an integer of 2 or more;
   R^{a1} is each independently at each occurrence -Z¹-SiR²¹ₚ₁R²²_{q1}R²³ᵣ₁;
   Z¹ is each independently at each occurrence an oxygen atom or a divalent organic group;
   R²¹ is each independently at each occurrence -Z¹'-SiR²¹'_{p1'}R²²'_{q1'}R²³'_{r1'};
   R²² is each independently at each occurrence a hydroxyl group or a hydrolyzable group;
   R²³ is each independently at each occurrence a hydrogen atom or a monovalent organic group;
   p1 is each independently at each occurrence an integer of 0 to 3;
   q1 is each independently at each occurrence an integer of 0 to 3;
   r1 is each independently at each occurrence an integer of 0 to 3;
   the sum of p1, q1, and r1 is 3 in the SiR²¹ₚ₁R²²_{q1}R²³ᵣ₁ unit;
   Z¹' is each independently at each occurrence an oxygen atom or a divalent organic group;
   R²¹' is each independently at each occurrence -Z¹"-SiR²²"_{q1"}R²³"_{r1"} ;
   R²²' is each independently at each occurrence a hydroxyl group or a hydrolyzable group;
   R²³' is each independently at each occurrence a hydrogen atom or a monovalent organic group;
   p1' is each independently at each occurrence an integer of 0 to 3;
   q1' is each independently at each occurrence an integer of 0 to 3;
   r1' is each independently at each occurrence an integer of 0 to 3;
   the sum of p1', q1', and r1' is 3 in the SiR²¹'_{p1'}R²²'_{q1'}R²³'_{r1'} unit;
   Z¹" is each independently at each occurrence an oxygen atom or a divalent organic group;
   R²²" is each independently at each occurrence a hydroxyl group or a hydrolyzable group;
   R²³" is each independently at each occurrence a hydrogen atom or a monovalent organic group;
   q1" is each independently at each occurrence an integer of 0 to 3;
   r1" is each independently at each occurrence an integer of 0 to 3;
   the sum of q1" and r1" is 3 in the SiR²²"_{q1"}R²³"_{r1"} unit;
   R^{b1} is each independently at each occurrence a hydroxyl group or a hydrolyzable group;
   R^{c1} is each independently at each occurrence a hydrogen atom or a monovalent organic group;
   k1 is each independently at each occurrence an integer of 0 to 3;
   l1 is each independently at each occurrence an integer of 0 to 3;
   m1 is each independently at each occurrence an integer of 0 to 3;
   the sum of k1, l1, and m1 is 3 in the SiR^{a1}ₖ₁R^{b1}ₗ₁R^{c1}ₘ₁ unit;
   R^{d1} is each independently at each occurrence -Z²-CR³¹p₂R³²q₂R³³ᵣ₂ ;
   Z² is each independently at each occurrence a single bond, an oxygen atom, or a divalent organic group;
   R³¹ is each independently at each occurrence -Z²'-CR³²'q_{2'}R³³'_{r2'};
   R³² is each independently at each occurrence -Z³-SiR³⁴ₙ₂R³⁵₃₋ₙ₂ ;
   R³³ is each independently at each occurrence a hydrogen atom, a hydroxyl group, or a monovalent organic group;
   p2 is each independently at each occurrence an integer of 0 to 3;
   q2 is each independently at each occurrence an integer of 0 to 3;
   r2 is each independently at each occurrence an integer of 0 to 3;
   the sum of p2, q2, and r2 is 3 in the SiR³¹ₚ₂R³²_{q2}R³³ᵣ₂ unit;
   Z²' is each independently at each occurrence a single bond, an oxygen atom, or a divalent organic group;
   R³²' is each independently at each occurrence -Z³-SiR³⁴ₙ₂R³⁵₃₋ₙ₂ ;
   R³³' is each independently at each occurrence a hydrogen atom, a hydroxyl group, or a monovalent organic group;
   q2' is each independently at each occurrence an integer of 0 to 3;
   r2' is each independently at each occurrence an integer of 0 to 3;
   the sum of q2' and r2' is 3 in the SiR³²'_{q2'}R³³'_{r2'} unit;
   Z³ is each independently at each occurrence a single bond, an oxygen atom, or a divalent organic group;
   R³⁴ is each independently at each occurrence a hydroxyl group or a hydrolyzable group;
   R³⁵ is each independently at each occurrence a hydrogen atom or a monovalent organic group;
   n2 is each independently at each occurrence an integer of 0 to 3;
   R^{e1} is each independently at each occurrence -Z³-SiR³⁴ₙ₂R³³₃₋ₙ₂ ;
   R^{f1} is each independently at each occurrence a hydrogen atom, a hydroxyl group, or a monovalent organic group;
   k2 is each independently at each occurrence an integer of 0 to 3;
   l2 is each independently at each occurrence an integer of 0 to 3;
   m2 is each independently at each occurrence an integer of 0 to 3;
   the sum of k2, l2, and m2 is 3 in the CR^{d1}ₖ₂R^{e1}ₗ₂R^{f1}ₘ₂ unit;
   R91 and R^{h1} are each independently at each occurrence - Z⁴-SiR¹¹ₙ₁R¹²₃₋ₙ₁, -Z⁴-SiR^{a1}ₖ₁Rb¹ₗ₁R^{c1}ₘ₁, or -Z⁴-CR^{d1}ₖ₂R^{e1}ₗ₂R^{f1}ₘ₂; and
   Z⁴ is each independently at each occurrence a single bond, an oxygen atom, or a divalent organic group,
   provided that in the formulae (S1), (S3), (S4), and (S5), at least two Si atoms to which a hydroxyl group or a hydrolyzable group is bonded are present.
[9] The surface-treating agent according to any one of [1] to [8], wherein each of α, β, and γ is 1.
[10] The surface-treating agent according to any one of [1] to [9], wherein
   X^{A} and X^{B} are each independently a single bond or a group represented by the following formula:

   - (R⁵¹)ₚ₅-(X⁵¹)_{q5}-

   -wherein
   R⁵¹ is a single bond, -(CH₂)ₛ₅-, or an o-, m-, or p-phenylene group;
   s5 is an integer of 1 to 20;
   X⁵¹ is - (X⁵²)₁₅-;
   X⁵² is each independently at each occurrence a group selected from the group consisting of -O-, -S-, an o-, m-, or p-phenylene group, -CO-, -C(O)O-, -Si(R⁵³)₂-, - (Si(R⁵³)₂O)ₘ₅-Si(R⁵³)₂-, -CONR⁵⁴-, -O-CONR⁵⁴-, -NR⁵⁴-, and - (CH₂)ₙ₅-;
   R⁵³ is each independently at each occurrence a monovalent organic group;
   R⁵⁴ is each independently at each occurrence a hydrogen atom or a monovalent organic group;
   m5 is each independently at each occurrence an integer of 1 to 100;
   n5 is each independently at each occurrence an integer of 1 to 20;
   l5 is an integer of 1 to 10;
   p5 is 0 or 1; and
   q5 is 0 or 1,
   where at least one of p5 and q5 is 1, and the occurrence order of the respective repeating units enclosed in parentheses provided with p5 or q5 is not limited.
[11] The surface-treating agent according to any one of [1] to [10], wherein a content of the fluoropolyether group-containing silane compound (A) is 50 mol% or more based on the total of the fluoropolyether group-containing silane compound (A) and the fluoropolyether group-containing silane compound (B).
[12] The surface-treating agent according to any one of [1] to [11], which is used as an antifouling coating agent or a waterproof coating agent.
[13] The surface-treating agent according to any one of [1] to [12], which is for wet coating.
[14] An article comprising a substrate and a layer on the substrate, the layer being formed of the surface-treating agent according to any one of [1] to [13].
[15] The article according to [14], which is an optical member.

### Advantageous Effect of Invention

According to the present disclosure, a surface-treating agent capable of forming a surface-treating layer having higher abrasion durability is provided.

### Description of Embodiments

The term "monovalent organic group", as used herein, refers to a monovalent group containing carbon. The monovalent organic group is not limited, and may be a hydrocarbon group or a derivative thereof. The derivative of the hydrocarbon group refers to a group that has one or more of N, O, S, Si, amide, sulfonyl, siloxane, carbonyl, carbonyloxy, and the like at the end or in the molecular chain of the hydrocarbon group. The simple term "organic group" refers to a monovalent organic group. The term "dito decavalent organic group" means a di- to decavalent group containing carbon. The di- to decavalent organic group may be, but is not limited to, a di- to decavalent group obtained by further removing 1 to 9 hydrogen atoms from an organic group. The divalent organic group is not limited, and examples thereof include divalent groups obtained by further removing one hydrogen atom from an organic group.

The term "hydrocarbon group", as used herein, refers to a group that contains carbon and hydrogen and that is obtained by removing one hydrogen atom from a hydrocarbon. The hydrocarbon group is not limited, and examples thereof include a C₁₋₂₀ hydrocarbon group optionally substituted with one or more substituents, such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures.

Each substituent of the "hydrocarbon group", as used herein, is not limited, and examples thereof include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5-to 10-membered heteroaryl group, each of which is optionally substituted with one or more halogen atoms.

The term "hydrolyzable group", as used herein, means a group which can undergo a hydrolysis reaction, namely, means a group which can be removed from a main backbone of the compound by a hydrolysis reaction. Examples of the hydrolyzable group include -OR^{h}, -OCOR^{h}, -O-N=CR^{h}₂, -NR^{h}₂, - NHR^{h}, and a halogen (in these formulae, R^{h} represents a substituted or unsubstituted C₁₋₄ alkyl group).

The surface-treating agent of the present disclosure comprises a silane compound (A) containing a fluoropolyether group having a branched structure, and a silane compound (B) containing a linear fluoropolyether group.

### [Fluoropolyether group-containing silane compound (A)]

The fluoropolyether group-containing silane compound
(A) is represented by the following formula (1):

   R^{F1}_{α}-X^{A}-R^{S1}_{β} (1)

   wherein
   R^{F1} is each independently at each occurrence Rf¹-R^{FA}-O_{q}-;
   Rf¹ is each independently at each occurrence a C₁₋₁₆ alkyl group optionally substituted with one or more fluorine atoms;
   R^{FA} is each independently at each occurrence a fluoropolyether group having a branched structure;
   q is each independently at each occurrence 0 or 1;
   R^{S1} is each independently at each occurrence a Si atomcontaining group having a hydroxyl group or a hydrolyzable group;
   X^{A} is each independently a single bond or a di- to decavalent organic group;
   α is an integer of 1 to 9; and
   β is an integer of 1 to 9.
   R^{F1} is preferably, each independently at each occurrence, Rf¹-R^{FA}-O_{q}-.

In the above formula, Rf¹ is each independently at each occurrence a C₁₋₁₆ alkyl group optionally substituted with one or more fluorine atoms.

In the above C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular C₁₋₃ alkyl group.

Rf¹ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The above C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular C₁₋₃ perfluoroalkyl group, and specifically -CF₃, -CF₂CF₃, or -CF₂CF₂CF₃.

q is each independently at each occurrence 0 or 1. In one embodiment, q is 0. In another embodiment, q is 1.

In the above formula, R^{FA} is each independently at each occurrence a fluoropolyether group having a branched structure.

Herein, the fluoropolyether group is typically represented by the following formula (f0):

- (OC₆F₁₂)ₐ-(OC₅F₁₀)_{b}-(OC₄F₈)_{c}-(OC₃X^{F}₆)_{d}-(OC₂F₄)ₑ-(OCF₂)_{f}- (f0)

wherein
a, b, c, d, e, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and
X^{F} is each independently at each occurrence a hydrogen atom, a fluorine atom, or a chlorine atom.

In the formula (f0), X^{F} is preferably a hydrogen atom or a fluorine atom, and more preferably a fluorine atom.

In the formula (f0), a, b, c, d, e, and f are, preferably, each independently an integer of 0 to 100.

In the formula (f0), the sum of a, b, c, d, e, and f is preferably 5 or more, and more preferably 10 or more, and it may be, for example, 15 or more or 20 or more. The sum of a, b, c, d, e, and f is preferably 200 or less, more preferably 100 or less, and still more preferably 60 or less, and it may be, for example, 50 or less or 30 or less.

In the formula (f0), the above repeating units may be linear or branched, or they may contain a ring structure. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like. -(OC₅F₁₀)- may be - (OCF₂CF₂CF₂CF₂CF₂)-, -(OCF (CF₃)CF₂CF₂CF₂)-, - (OCF₂CF(CF₃)CF₂CF₂)-, -(OCF₂CF₂CF(CF₃)CF₂)-, - (OCF₂CF₂CF₂CF(CF₃))-, or the like. -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅)) - (OC₃F₆)- (that is, in the above formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and - (OCF(CF₃))-.

The above ring structure may be any of the following 3-membered ring, 4-membered rings, 5-membered rings, and 6-membered rings: 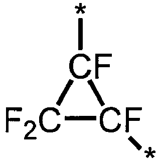 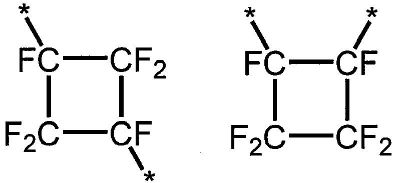 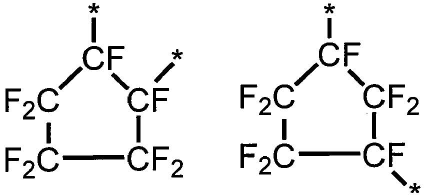 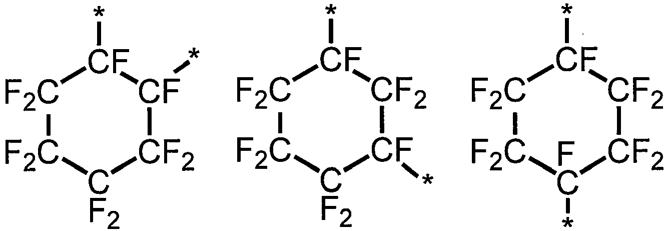 wherein * represents a binding position.

The above ring structure may be preferably a 4-membered ring, a 5-membered ring, or a 6-membered ring, and more preferably a 4-membered ring or a 6-membered ring.

The repeating units having a ring structure may be preferably any of the following units: 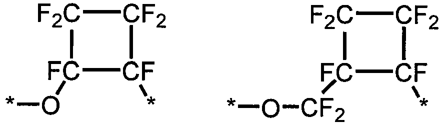 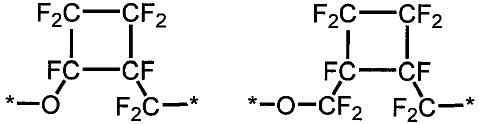 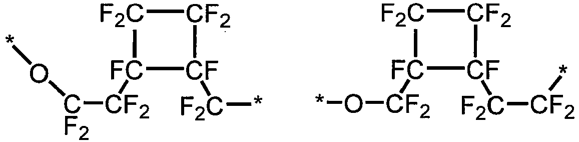 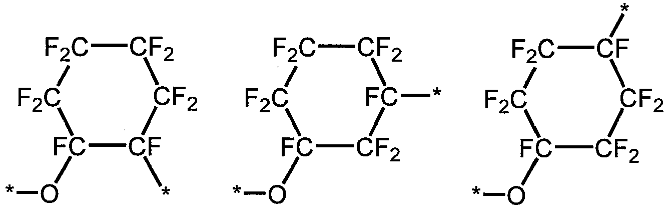 wherein * represents a binding position.

In one embodiment, the formula (f0) is represented by any of the following formulae (f1) to (f6):

-(OC₃F₆)_{d}-(OC₂F₄)ₑ- (f1)

wherein d is an integer of 1 to 200, and e is 0 or 1, preferably 1;

- (OC₄F₈)_{c}-(OC₃F₆)_{d}-(OC₂F₄)ₑ-(OCF₂)_{f}- (f2)

wherein c and d are each independently an integer of 0 or more and 30 or less, and e and f are each independently an integer of 1 or more and 200 or less;
the sum of c, d, e, and f is 2 or more; and
the occurrence order of the respective repeating units enclosed in parentheses provided with the subscript c, d, e, or f is not limited in the formula;

   - (R⁶-R⁷)_{g}- (f3)

   wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
g is an integer of 2 to 100;

   -(R⁶-R⁷)_{g}-R^{r}-(R⁷'-R⁶')_{g'}- (f4)

   wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
R⁶' is OCF₂ or OC₂F₄;
R⁷' is a group selected from OC₂F₄, OC₃F₆, OC₄F₈, OC₅F₁₀, and OC₆F₁₂, or is a combination of two or three groups independently selected from these groups;
g is an integer of 2 to 100;
g' is an integer of 2 to 100; and
R^{r} is any of the following: 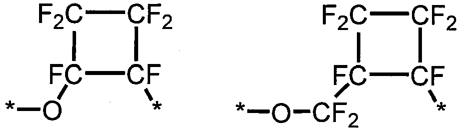 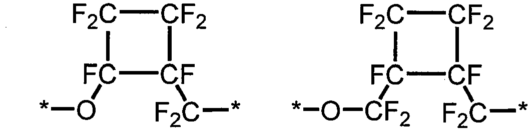 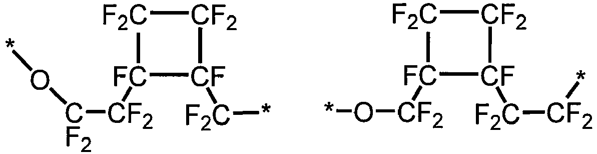 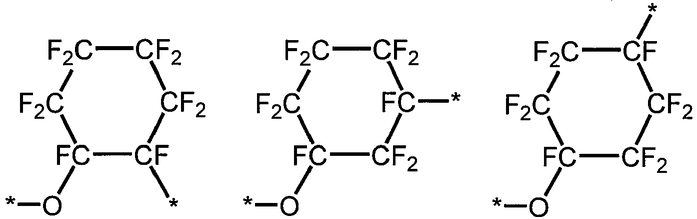 wherein * represents a binding position;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

   wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)

   wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.

In the above formula (f1), d is preferably 5 to 200, more preferably 10 to 100, and still more preferably 15 to 50, and it is, for example, an integer of 25 to 35. In one embodiment, e is 0. In another embodiment, e is 1.

In the above formula (f2), e and f are each independently an integer of preferably 5 to 200, and more preferably 10 to 200. In addition, the sum of c, d, e, and f is preferably 5 or more, and more preferably 10 or more, and it may be, for example, 15 or more or 20 or more.

In the above formula (f3), R⁶ is preferably OC₂F₄. In the above (f3), R⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and examples thereof include -OC₂F₄OC₃F₆-, -OC₂F₄OC₄F₈-, -OC₃F₆OC₂F₄-, - OC₃F₆OC₃F₆-, -OC₃F₆OC₄F₈-, -OC₄F₈OC₄F₈-, -OC₄F₈OC₃F₆-, - OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the above formula (f3), g is an integer of preferably 3 or more, and more preferably 5 or more. The above g is preferably an integer of 50 or less. In the above formula (f3), OC₂F₄, OC₃F₆, OC₄F₈, OC₅F₁₀, and OC₆F₁₂ may be either linear or branched. In this embodiment, the above formula (f3) is preferably -(OC₂F₄-OC₃F₆)_{g}- or -(OC₂F₄-OC₄F₈)_{g}-.

In the above formula (f4), R⁶, R⁷, and g have the same definition as described for the above formula (f3) and have the same embodiments. R⁶', R⁷', and g' have the same definition as R⁶, R⁷, and g described in the above formula (f3), respectively, and have the same embodiments. R^{r} is preferably any of the following: 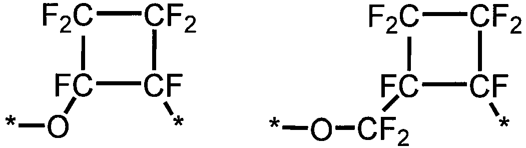 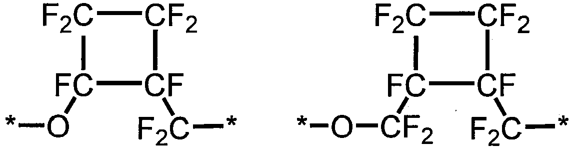 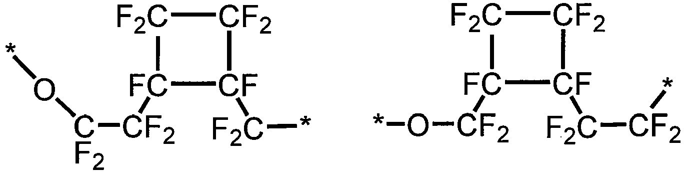 wherein * represents a binding position, and more preferably 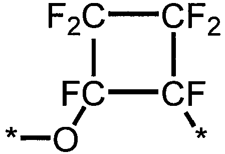 wherein * represents a binding position.

In the above formula (f5), e is an integer of preferably 1 or more and 100 or less, and more preferably 5 or more and 100 or less. The sum of a, b, c, d, e, and f is preferably 5 or more, and more preferably 10 or more, and it is, for example, 10 or more and 100 or less.

In the above formula (f6), f is an integer of preferably 1 or more and 100 or less, and more preferably 5 or more and 100 or less. The sum of a, b, c, d, e, and f is preferably 5 or more, and more preferably 10 or more, and it is, for example, 10 or more and 100 or less.

When f and e are 1 or more in the above formulae (f0), (f2), (f3), (f4), (f5), and (f6), the ratio of e to f (hereinafter, referred to as an "e/f ratio") is 0.1 to 10, preferably 0.2 to 5, more preferably 0.2 to 2, still more preferably 0.2 to 1.5, and further preferably 0.2 to 0.85. With an e/f ratio of 10 or less, the lubricity, abrasion durability, and chemical resistance (such as durability against artificial sweat) of a surface-treating layer obtained from the compound are further improved. The lower the e/f ratio is, the more improved the lubricity and the abrasion durability of the surface-treating layer are. On the other hand, with an e/f ratio of 0.1 or more, the stability of the compound can be further enhanced. The larger the e/f ratio is, the more improved the stability of the compound is.

The number average molecular weight of the above fluoropolyether group is not limited, and it is, for example, 500 to 30,000, preferably 1,500 to 30,000, and more preferably 2,000 to 10,000. Herein, the number average molecular weight of the fluoropolyether group is defined as a value obtained by ¹⁹F-NMR measurement.

In the above formula (1), R^{FA} is, each independently at each occurrence, preferably a group represented by the formula (f0) and having at least one branched structure.

In one embodiment, R^{FA} is each independently at each occurrence a group represented by the formula (f0) in which all repeating units have a branched structure.

Examples of the branched chain in the above branched structure may include CF₃, CF₂CF₃, and CF₂CF₂CF₃, and it is preferably CF₃.

As for the above repeating units having a branched structure, examples of -(OC₆F₁₂)- may include-(OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, and - (OCF₂CF₂CF₂CF₂CF(CF₃))-. Examples of -(OC₅F₁₀)- may include - (OCF(CF₃)CF₂CF₂CF₂)-, -(OCF₂CF(CF₃)CF₂CF₂)-, - (OCF₂CF₂CF(CF₃)CF₂)-, and -(OCF₂CF₂CF₂CF(CF₃))-. Examples of -(OC₄F₈)- may include - (OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-. Examples of -(OC₃F₆)- (that is, in the above formula (f0), X^{F} is a fluorine atom) may include -(OCF(CF₃)CF₂)- and - (OCF₂CF(CF₃))-. Examples of -(OC₂F₄)- may include - (OCF(CF₃)) -.

R^{FA} may contain, in addition to a repeating unit having a branched structure, a linear repeating unit. Examples of the linear repeating unit include -(OCF₂CF₂CF₂CF₂CF₂CF₂)-, - (OCF₂CF₂CF₂CF₂CF₂)-, -(OCF₂CF₂CF₂CF₂)-, -(OCF₂CF₂CF₂)-, and - (OCF₂CF₂)-.

The number of repeating units having a branched structure in R^{FA} is preferably at least 5, more preferably at least 10, and still more preferably at least 20.

In R^{FA}, the number of repeating units having a branched structure is preferably 40 or more, more preferably 60 or more, and still more preferably 80 or more, based on 100 of the total number of repeating units (for example, the sum of a, b, c, d, e, and f above). In R^{FA}, the number of repeating units having a branched structure may be 100 or less, and it may be, for example, 90 or less, based on 100 of the total number of repeating units.

In R^{FA}, the number of repeating units having a branched structure is preferably 40 to 100, more preferably 60 to 100, and still more preferably 80 to 100, based on 100 of the total number of repeating units.

In a preferred embodiment, R^{FA} is each independently at each occurrence a group represented by the above formula (f1), (f2), (f3), (f4), (f5), or (f6) and having at least one branched structure.

In a preferred embodiment, R^{FA} is each independently at each occurrence a group represented by the following formula (f1a) :

-(OCF(CF₃)CF₂)_{d}-(OCF(CF₃))ₑ- (f1a)

wherein d is an integer of 1 to 200, and e is 0 or 1.

R^{S1} is each independently at each occurrence a Si atomcontaining group having a hydroxyl group or a hydrolyzable group (hereinafter, such a group is also simply referred to as a "hydrolyzable silane group").

R^{S1} is preferably, each independently at each occurrence, a group represented by the following formula (S1), (S2), (S3), (S4), or (S5):

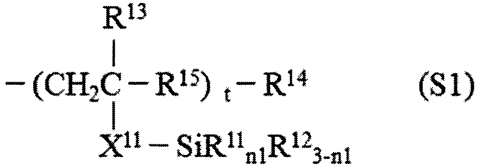

-SiR¹¹ₙ₁R¹²₃₋ₙ₁ (S2)

-SiR^{a1}ₖ₁R^{b1}ₗ₁R^{c1}ₘ₁ (S2)

-CR^{d1}ₖ₂R^{e1}ₗ₂R^{f1}ₘ₂ (S4)

-NR^{g1}R^{h1} (S5)

wherein
R¹¹ is each independently at each occurrence a hydroxyl group or a hydrolyzable group;
R¹² is each independently at each occurrence a hydrogen atom or a monovalent organic group;
n1 is each independently an integer of 0 to 3 for each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
R¹⁴ is each independently at each occurrence a hydrogen atom, a halogen atom, or -X¹¹-SiR¹¹ₙ₁R¹²₃₋ₙ₁;
R¹⁵ is each independently at each occurrence a single bond, an oxygen atom, an alkylene group having 1 to 6 carbon atoms, or an alkyleneoxy group having 1 to 6 carbon atoms;
t is each independently at each occurrence an integer of 2 or more;
R^{a1} is each independently at each occurrence -Z¹-S1R²¹ₚ₁R²²_{q1}R²³ᵣ₁:
Z¹ is each independently at each occurrence an oxygen atom or a divalent organic group;
R²¹ is each independently at each occurrence -Z¹'-SiR²¹'_{p1'}R²²'_{q1'}R²³'_{r1'} ;
R²² is each independently at each occurrence a hydroxyl group or a hydrolyzable group;
R²³ is each independently at each occurrence a hydrogen atom or a monovalent organic group;
p1 is each independently at each occurrence an integer of 0 to 3;
q1 is each independently at each occurrence an integer of 0 to 3;
r1 is each independently at each occurrence an integer of 0 to 3;
Z¹' is each independently at each occurrence an oxygen atom or a divalent organic group;
R²¹' is each independently at each occurrence -Z¹"-SiR²²"_{q1"}R²³"_{r1"};
R²²' is each independently at each occurrence a hydroxyl group or a hydrolyzable group;
R²³' is each independently at each occurrence a hydrogen atom or a monovalent organic group;
p1' is each independently at each occurrence an integer of 0 to 3;
q1' is each independently at each occurrence an integer of 0 to 3;
r1' is each independently at each occurrence an integer of 0 to 3;
Z¹" is each independently at each occurrence an oxygen atom or a divalent organic group;
R²²" is each independently at each occurrence a hydroxyl group or a hydrolyzable group;
R²³" is each independently at each occurrence a hydrogen atom or a monovalent organic group;
q1" is each independently at each occurrence an integer of 0 to 3;
r1" is each independently at each occurrence an integer of 0 to 3;
R^{b1} is each independently at each occurrence a hydroxyl group or a hydrolyzable group;
R^{c1} is each independently at each occurrence a hydrogen atom or a monovalent organic group;
k1 is each independently at each occurrence an integer of 0 to 3;
l1 is each independently at each occurrence an integer of 0 to 3;
m1 is each independently at each occurrence an integer of 0 to 3;
R^{d1} is each independently at each occurrence -Z²-CR³¹p₂R³²q₂R³³ᵣ₂ ;
Z² is each independently at each occurrence a single bond, an oxygen atom, or a divalent organic group;
R³¹ is each independently at each occurrence -Z²'-CR³²'_{q2'}R³³'_{r2'};
R³² is each independently at each occurrence -Z³-SiR³⁴ₙ₂R³⁵₃₋ₙ₂;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
Z²' is each independently at each occurrence a single bond, an oxygen atom, or a divalent organic group;
R³²' is each independently at each occurrence -Z³-SiR³⁴ₙ₂R³³₃₋ₙ₂ ;
R³³' is each independently at each occurrence a hydrogen atom, a hydroxyl group, or a monovalent organic group;
q2' is each independently at each occurrence an integer of 0 to 3;
r2' is each independently at each occurrence an integer of 0 to 3;
Z³ is each independently at each occurrence a single bond, an oxygen atom, or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂ ;
R^{f1} is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3;
R^{g1} and R^{h1} are each independently at each occurrence - Z⁴-SiR¹¹ₙ₁R¹²₃₋ₙ₁, -Z⁴-SiR^{a1}ₖ₁Rb¹ₗ₁R^{c1}ₘ₁, or -Z⁴-CR^{d1}ₖ₂R^{e1}ₗ₂R^{f1}ₘ₂; and
Z⁴ is each independently at each occurrence a single bond, an oxygen atom, or a divalent organic group,
provided that in the formulae (S1), (S2), (S3), (S4), and (S5), at least one Si atom to which a hydroxyl group or a hydrolyzable group is bonded is present.

In the above formulae, R¹¹ is each independently at each occurrence a hydroxyl group or a hydrolyzable group.

R¹¹ is preferably, each independently at each occurrence, a hydrolyzable group.

R¹¹ is preferably, each independently at each occurrence, -OR^{h}, -OCOR^{h}, -O-N=CR^{h}₂, -NR^{h}₂, -NHR^{h}, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

In the above formulae, R¹² is each independently at each occurrence a hydrogen atom or a monovalent organic group. Such a monovalent organic group is a monovalent organic group excluding the above hydrolyzable group.

In R¹², the monovalent organic group is preferably a C₁₋₂₀ alkyl group, more preferably a C₁₋₆ alkyl group, and still more preferably a methyl group.

In the above formulae, n1 is each independently an integer of 0 to 3 for each (SiR¹¹ₙ₁R¹²₃₋ₙ₁) unit. However, in the formula (S1), at least one (SiR¹¹ₙ₁R¹²₃₋ₙ₁) unit with n1 of 1 to 3 is present. That is, in the formula (S1), not all n1 are 0 at the same time. In other words, in the formula (S1), at least one Si atom to which a hydroxyl group or a hydrolyzable group is bonded is present.

n1 is each independently an integer of preferably 1 to 3, more preferably 2 to 3, and still more preferably 3 for each (SiR¹¹ₙ₁R¹²₃₋ₙ₁) unit.

In the above formula, X¹¹ is each independently at each occurrence a single bond or a divalent organic group. Such a divalent organic group is preferably -R²⁸-Oₓ-R²⁹- (wherein R²⁸ and R²⁹ are each independently at each occurrence a single bond or a C₁₋₂₀ alkylene group, and x is 0 or 1). Such a C₁₋₂₀ alkylene group may be linear or branched, but is preferably linear. Such a C₁₋₂₀ alkylene group is preferably a C₁₋₁₀ alkylene group, more preferably a C₁₋₆ alkylene group, and still more preferably a C₁₋₃ alkylene group.

In one embodiment, X¹¹ is each independently at each occurrence a -C₁₋₆ alkylene-O-C₁₋₆ alkylene- or a -O-C₁₋₆ alkylene-.

In a preferred embodiment, X¹¹ is each independently at each occurrence a single bond or a linear C₁₋₆ alkylene group, preferably a single bond or a linear C₁₋₃ alkylene group, more preferably a single bond or a linear C₁₋₂ alkylene group, and still more preferably a linear C₁₋₂ alkylene group.

In the above formula, R¹³ is each independently at each occurrence a hydrogen atom or a monovalent organic group. Such a monovalent organic group is preferably a C₁₋₂₀ alkyl group.

In a preferred embodiment, R¹³ is each independently at each occurrence a hydrogen atom or a linear C₁₋₆ alkyl group, preferably a hydrogen atom or a linear C₁₋₃ alkyl group, preferably a hydrogen atom or a methyl group.

In the above formula, t is each independently at each occurrence an integer of 2 or more.

In a preferred embodiment, t is each independently at each occurrence an integer of 2 to 10, preferably an integer of 2 to 6.

In the above formula, R¹⁴ is each independently at each occurrence a hydrogen atom, a halogen atom, or -X¹¹-SiR¹¹ₙ₁R¹²₃₋ₙ₁. Such a halogen atom is preferably an iodine atom, a chlorine atom, or a fluorine atom, and more preferably a fluorine atom. In a preferred embodiment, R¹⁴ is a hydrogen atom.

In the above formula, R¹⁵ is each independently at each occurrence a single bond, an oxygen atom, an alkylene group having 1 to 6 carbon atoms, or an alkyleneoxy group having 1 to 6 carbon atoms.

In one embodiment, R¹⁵ is each independently at each occurrence an oxygen atom, an alkylene group having 1 to 6 carbon atoms, or an alkyleneoxy group having 1 to 6 carbon atoms.

In a preferred embodiment, R¹⁵ is a single bond.

In one embodiment, the formula (S1) is the following formula (S1-a): 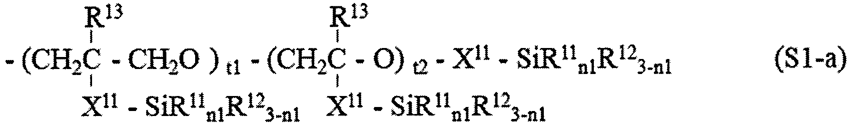 wherein
R¹¹, R¹², R¹³, X¹¹, and n1 have the same definition as described for the above formula (S1);
t1 and t2 are each independently at each occurrence an integer of 1 or more, preferably an integer of 1 to 10, more preferably an integer of 2 to 10, for example, an integer of 1 to 5 or an integer of 2 to 5; and
the occurrence order of the respective repeating units enclosed in parentheses provided with t1 and t2 is not limited in the formula.

In a preferred embodiment, the formula (S1) is the following formula (S1-b): 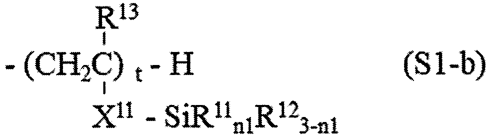 wherein R¹¹, R¹², R¹³, X¹¹, n1, and t have the same definition as described for the above formula (S1).

In the above formula, R^{a1} is each independently at each occurrence -Z¹-SiR²¹ₚ₁R²²_{q1}R²³ᵣ₁.

The above Z¹ is each independently at each occurrence an oxygen atom or a divalent organic group. The structure denoted as Z¹ hereinafter is bonded to (SiR²¹ₚ₁R²²_{q1}R²³ᵣ₁) on the right side.

In a preferred embodiment, Z¹ is a divalent organic group.

In a preferred embodiment, Z¹ does not include a group that forms a siloxane bond with the Si atom to which Z¹ is bonded. Preferably, in the formula (S3), (Si-Z¹-Si) does not contain a siloxane bond.

The above Z¹ is preferably a C₁₋₆ alkylene group, - (CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}-(wherein z3 is an integer of 0 to 6, such as an integer of 1 to 6, and z4 is an integer of 0 to 6, such as an integer of 1 to 6). Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z¹ is a C₁₋₆ alkylene group or - (CH₂)_{z3}-phenylene-(CH₂)_{z4}-, and preferably -phenylene-(CH₂)_{z4}-. When Z¹ is such a group, light resistance, in particular ultraviolet resistance, can be further enhanced.

In another preferred embodiment, the above Z¹ is a C₁₋₃ alkylene group. In one embodiment, Z¹ may be -CH₂CH₂CH₂-. In another embodiment, Z¹ may be -CH₂CH₂-.

The above R²¹ is each independently at each occurrence -Z^{1'}-SiR^{21'}_{p1'}R^{22'}_{q1'}R^{23'}_{r1'}.

The above Z^{1'} is each independently at each occurrence an oxygen atom or a divalent organic group. The structure denoted as Z^{1'} hereinafter is bonded to (SiR^{21'}_{p1'}R^{22'}_{q1'}R^{23'}_{r1'}) on the right side.

In a preferred embodiment, Z^{1'} is a divalent organic group.

In a preferred embodiment, Z^{1'} does not include a group that forms a siloxane bond with the Si atom to which Z^{1'} is bonded. Preferably, in the formula (S3), (Si-Z^{1'}-Si) does not contain a siloxane bond.

The above Z^{1'} is preferably a C₁₋₆ alkylene group, - (CH₂)_{z1'}-O-(CH₂)_{z2'}- (wherein z1' is an integer of 0 to 6, such as an integer of 1 to 6, and z2' is an integer of 0 to 6, such as an integer of 1 to 6), or - (CH₂)_{z3'}-phenylene-(CH₂)_{z4'}-(wherein z3' is an integer of 0 to 6, such as an integer of 1 to 6, and z4' is an integer of 0 to 6, such as an integer of 1 to 6). Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z^{1'} is a C₁₋₆ alkylene group or -(CH₂)_{z3'}-phenylene-(CH₂)_{z4'}-, and preferably -phenylene-(CH₂)_{z4'}-. When Z^{1'} is such a group, light resistance, in particular ultraviolet resistance, can be further enhanced.

In another preferred embodiment, the above Z^{1'} is a C₁₋₃ alkylene group. In one embodiment, Z^{1'} may be -CH₂CH₂CH₂-. In another embodiment, Z^{1'} may be -CH₂CH₂-.

The above R^{21'} is each independently at each occurrence -Z^{1"}-SiR^{22"}_{q1"}R^{23"}_{r1"}.

The above Z^{1"} is each independently at each occurrence an oxygen atom or a divalent organic group. The structure denoted as Z^{1"} hereinafter is bonded to (SiR^{22"}_{q1"}R^{23"}_{r1"}) on the right side.

In a preferred embodiment, Z^{1"} is a divalent organic group.

In a preferred embodiment, Z^{1"} does not include a group that forms a siloxane bond with the Si atom to which Z^{1"} is bonded. Preferably, in the formula (S3), (Si-Z^{1"}-Si) does not contain a siloxane bond.

The above Z^{1"} is preferably a C₁₋₆ alkylene group, - (CH₂)_{z1"}-O-(CH₂)_{z2"}- (wherein z1" is an integer of 0 to 6, such as an integer of 1 to 6, and z2" is an integer of 0 to 6, such as an integer of 1 to 6), or -(CH₂)_{z3"}-phenylene-(CH₂)_{z4"}-(wherein z3" is an integer of 0 to 6, such as an integer of 1 to 6, and z4" is an integer of 0 to 6, such as an integer of 1 to 6). Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z^{1"} is a C₁₋₆ alkylene group or -(CH₂)_{z3"}-phenylene-(CH₂)_{z4"}-, and preferably -phenylene-(CH₂)_{z4"}-. When Z^{1"} is such a group, light resistance, in particular ultraviolet resistance, can be further enhanced.

In another preferred embodiment, the above Z^{1"} is a C₁₋₃ alkylene group. In one embodiment, Z^{1"} may be -CH₂CH₂CH₂-. In another embodiment, Z^{1"} may be -CH₂CH₂-.

The above R^{22"} is each independently at each occurrence a hydroxyl group or a hydrolyzable group.

The above R^{22"} is preferably, each independently at each occurrence, a hydrolyzable group.

The above R^{22"} is preferably, each independently at each occurrence, -OR^{h}, -OCOR^{h}, -O-N=CR^{h}₂, -NR^{h}₂, -NHR^{h}, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

The above R^{23"} is each independently at each occurrence a hydrogen atom or a monovalent organic group. Such a monovalent organic group is a monovalent organic group excluding the above hydrolyzable group.

In the above R^{23"}, the monovalent organic group is preferably a C₁₋₂₀ alkyl group, more preferably a C₁₋₆ alkyl group, and still more preferably a methyl group.

The above q1" is each independently at each occurrence an integer of 0 to 3, and the above r1" is each independently at each occurrence an integer of 0 to 3. The sum of q1" and r1" is 3 in the (SiR^{22"}_{q1"}R^{23"}_{r1"}) unit.

The above q1" is each independently an integer of preferably 1 to 3, more preferably 2 to 3, and still more preferably 3 for each (SiR^{22"}_{q1"}R^{23"}_{r1"}) unit.

The above R^{22'} is each independently at each occurrence a hydroxyl group or a hydrolyzable group.

R^{22'} is preferably, each independently at each occurrence, a hydrolyzable group.

R^{22'} is preferably, each independently at each occurrence, -OR^{h}, -OCOR^{h}, -O-N=CR^{h}₂, -NR^{h}₂, -NHR^{h}, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

The above R^{23'} is each independently at each occurrence a hydrogen atom or a monovalent organic group. Such a monovalent organic group is a monovalent organic group excluding the above hydrolyzable group.

In R^{23'}, the monovalent organic group is preferably a C₁₋₂₀ alkyl group, more preferably a C₁₋₆ alkyl group, and still more preferably a methyl group.

The above p1' is each independently at each occurrence an integer 0 to 3, q1' is each independently at each occurrence an integer of 0 to 3, and r1' is each independently at each occurrence an integer of 0 to 3. The sum of p', q1', and r1' is 3 in the (SiR^{21'}_{p1'}R^{22'}_{q1'}R^{23'}_{r1'}) unit.

In one embodiment, p1' is 0.

In one embodiment, p1' may be each independently an integer of 1 to 3, an integer of 2 to 3, or 3 for each (SiR^{21'}_{p1'}R^{22'}_{q1'}R^{23'}_{r1'}) unit. In a preferred embodiment, p1' is 3.

In one embodiment, q1' is each independently an integer of 1 to 3, preferably an integer of 2 to 3, and more preferably 3 for each (SiR^{21'}_{p1'}R^{22'}_{q1'}R^{23'}_{r1'}) unit.

In one embodiment, p1' is 0, and q1' is each independently an integer of 1 to 3, preferably an integer of 2 to 3, and more preferably 3 for each (SiR^{21'}_{p1'}R^{22'}_{q1'}R^{23'}_{r1'}) unit.

The above R²² is each independently at each occurrence a hydroxyl group or a hydrolyzable group.

R²² is preferably, each independently at each occurrence, a hydrolyzable group.

R²² is preferably, each independently at each occurrence, -OR^{h}, -OCOR^{h}, -O-N=CR^{h}₂, -NR^{h}₂, -NHR^{h}, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

The above R²³ is each independently at each occurrence a hydrogen atom or a monovalent organic group. Such a monovalent organic group is a monovalent organic group excluding the above hydrolyzable group.

In R²³, the monovalent organic group is preferably a C₁₋₂₀ alkyl group, more preferably a C₁₋₆ alkyl group, and still more preferably a methyl group.

The above p1 is each independently at each occurrence an integer of 0 to 3, q1 is each independently at each occurrence an integer of 0 to 3, and r1 is each independently at each occurrence an integer of 0 to 3. The sum of p1, q1, and r1 is 3 in the (SiR²¹ₚ₁R²²_{q1}R²³ᵣ₁) unit.

In one embodiment, p1 is 0.

In one embodiment, p1 may be each independently an integer of 1 to 3, an integer of 2 to 3, or 3 for each (SiR²¹ₚ₁R²²_{q1}R²³ᵣ₁) unit. In a preferred embodiment, p1 is 3.

In one embodiment, q1 is each independently an integer of 1 to 3, preferably an integer of 2 to 3, and more preferably 3 for each (SiR²¹ₚ₁R²²_{q1}R²³ᵣ₁) unit.

In one embodiment, p1 is 0, and q1 is each independently an integer of 1 to 3, preferably an integer of 2 to 3, and still more preferably 3 for each (SiR²¹ₚ₁R²²_{q1}R²³ᵣ₁) unit.

In the above formula, R^{b1} is each independently at each occurrence a hydroxyl group or a hydrolyzable group.

The above R^{b1} is preferably, each independently at each occurrence, a hydrolyzable group.

The above R^{b1} is preferably, each independently at each occurrence, -OR^{h}, -OCOR^{h}, -O-N=CR^{h}₂, -NR^{h}₂, -NHR^{h}, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

In the above formula, R^{c1} is each independently at each occurrence a hydrogen atom or a monovalent organic group. Such a monovalent organic group is a monovalent organic group excluding the above hydrolyzable group.

In the above R^{c1}, the monovalent organic group is preferably a C₁₋₂₀ alkyl group, more preferably a C₁₋₆ alkyl group, and still more preferably a methyl group.

The above k1 is each independently at each occurrence an integer of 0 to 3, l1 is each independently at each occurrence an integer of 0 to 3, and m1 is each independently at each occurrence an integer of 0 to 3. The sum of k1, l1, and m1 is 3 in the (SiR^{a1}ₖ₁R^{b1}ₗ₁R^{c1}ₘ₁) unit.

In one embodiment, k1 is each independently an integer of 1 to 3, preferably 2 or 3, and more preferably 3 for each (SiR^{a1}ₖ₁R^{b1}ₗ₁R^{c1}ₘ₁) unit. In a preferred embodiment, k1 is 3.

In a preferred embodiment, in the formula (S3), at least two Si atoms to which a hydroxyl group or a hydrolyzable group is bonded are present.

In a preferred embodiment, in the end part of the formula (S3), at least two Si atoms to which a hydroxyl group or a hydrolyzable group is bonded are present.

In a preferred embodiment, the group represented by the formula (S3) has any one of -Z¹-SiR²²_{q1}R²³ᵣ₁ (wherein q1 is an integer of 1 to 3, preferably 2 or 3, and more preferably 3, and r1 is an integer of 0 to 2), -Z^{1'}-SiR^{22'}_{q1'}R^{23'}_{r1'} (wherein q1' is an integer of 1 to 3, preferably 2 or 3, and more preferably 3, and r1' is an integer of 0 to 2), and -Z^{1"}-SiR^{22"}_{q1"}R^{23"}_{r1"} (wherein q1" is an integer of 1 to 3, preferably 2 or 3, and more preferably 3, and r1" is an integer of 0 to 2) . Z¹, Z^{1'}, Z^{1"}, R²², R²³, R^{22'}, R^{23'}, R^{22"}, and R^{23"} have the same definition as described above.

In a preferred embodiment, when R^{21'} is present in the formula (S3), q1" is an integer of 1 to 3, preferably 2 or 3, and more preferably 3 in at least one, preferably all of R^{21'} groups.

In a preferred embodiment, when R²¹ is present in the formula (S3), p1' is 0, and q1' is an integer of 1 to 3, preferably 2 or 3, and more preferably 3 in at least one, preferably all of R²¹ groups.

In a preferred embodiment, when R^{a1} is present in the formula (S3), p1 is 0, and q1 is an integer of 1 to 3, preferably 2 or 3, and more preferably 3 in at least one, preferably all of R^{a1} groups.

In a preferred embodiment, in the formula (S3), k1 is 2 or 3, preferably 3, p1 is 0, and q1 is 2 or 3, preferably 3.

R^{d1} is each independently at each occurrence -Z²-CR³¹ₚ₂R³²_{q2}R³³ᵣ₂.

Z² is each independently at each occurrence a single bond, an oxygen atom, or a divalent organic group. The structure denoted as Z² hereinafter is bonded to (CR³¹ₚ₂R³²_{q2}R³³ᵣ₂) on the right side.

In a preferred embodiment, Z² is a divalent organic group.

The above Z² is preferably a C₁₋₆ alkylene group, - (CH₂)_{z5}-O-(CH₂)_{z6}- (wherein z5 is an integer of 0 to 6, such as an integer of 1 to 6, and z6 is an integer of 0 to 6, such as an integer of 1 to 6), or - (CH₂)_{z7}-phenylene-(CH₂)_{z8}-(wherein z7 is an integer of 0 to 6, such as an integer of 1 to 6, and z8 is an integer of 0 to 6, such as an integer of 1 to 6). Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z² is a C₁₋₆ alkylene group or -(CH₂)_{z7}-phenylene-(CH₂)_{z8}-, and preferably -phenylene-(CH₂)_{z8}-. When Z² is such a group, light resistance, in particular ultraviolet resistance, can be further enhanced.

In another preferred embodiment, the above Z² is a C₁₋₃ alkylene group. In one embodiment, Z² may be -CH₂CH₂CH₂-. In another embodiment, Z² may be -CH₂CH₂-.

R³¹ is each independently at each occurrence -Z^{2'}-CR^{32'}q_{2'}R^{33'}_{r2'}.

Z^{2'} is each independently at each occurrence a single bond, an oxygen atom, or a divalent organic group. The structure denoted as Z^{2'} hereinafter is bonded to (CR^{32'}_{q2'}R^{33'}_{r2'}) on the right side.

The above Z^{2'} is preferably a C₁₋₆ alkylene group, - (CH₂)_{z5'}-O-(CH₂)_{z6'}- (wherein z5' is an integer of 0 to 6, such as an integer of 1 to 6, and z6' is an integer of 0 to 6, such as an integer of 1 to 6), or - (CH₂)_{z7'}-phenylene-(CH₂)_{z8'}-(wherein z7' is an integer of 0 to 6, such as an integer of 1 to 6, and z8' is an integer of 0 to 6, such as an integer of 1 to 6) . Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z^{2'} is a C₁₋₆ alkylene group or -(CH₂)_{z7'}-phenylene-(CH₂)_{z8'}-, and preferably -phenylene-(CH₂)_{z8'}-. When Z^{2'} is such a group, light resistance, in particular ultraviolet resistance, can be further enhanced.

In another preferred embodiment, the above Z^{2'} is a C₁₋₃ alkylene group. In one embodiment, Z^{2'} may be -CH₂CH₂CH₂-. In another embodiment, Z^{2'} may be -CH₂CH₂-.

The above R^{32'} is each independently at each occurrence -Z³-SiR³⁴ₙ₂R³⁵₃₋ₙ₂.

The above Z³ is each independently at each occurrence a single bond, an oxygen atom, or a divalent organic group. The structure denoted as Z³ hereinafter is bonded to (SiR³⁴ₙ₂R³⁵₃₋ₙ₂) on the right side.

In one embodiment, Z³ is an oxygen atom.

In one embodiment, Z³ is a divalent organic group.

The above Z³ is preferably a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z³ is a C₁₋₆ alkylene group or -(CH₂)_{z7"}-phenylene-(CH₂)_{z8"}-, and preferably -phenylene-(CH₂)_{z8"}-. When Z³ is such a group, light resistance, in particular ultraviolet resistance, can be further enhanced.

In another preferred embodiment, the above Z³ is a C₁₋₃ alkylene group. In one embodiment, Z³ may be -CH₂CH₂CH₂-. In another embodiment, Z³ may be -CH₂CH₂-.

The above R³⁴ is each independently at each occurrence a hydroxyl group or a hydrolyzable group.

R³⁴ is preferably, each independently at each occurrence, a hydrolyzable group.

R³⁴ is preferably, each independently at each occurrence, -OR^{h}, -OCOR^{h}, -O-N=CR^{h}₂, -NR^{h}₂, -NHR^{h}, or a halogen (in these formulae, R^{h} represents a substituted or unsubstituted C₁₋₄ alkyl group), and more preferably -OR^{h} (that is, an alkoxy group). Examples of R^{h} include unsubstituted alkyl groups such as a methyl group, an ethyl group, a propyl group, an isopropyl group, a n-butyl group, and an isobutyl group; and substituted alkyl groups such as a chloromethyl group. Among them, an alkyl group, particularly an unsubstituted alkyl group, is preferred, and a methyl group or an ethyl group is more preferred. In one embodiment, R^{h} is a methyl group, and in another embodiment, R^{h} is an ethyl group.

The above R³⁵ is each independently at each occurrence a hydrogen atom or a monovalent organic group. Such a monovalent organic group is a monovalent organic group excluding the above hydrolyzable group.

In the above R³⁵, the monovalent organic group is preferably a C₁₋₂₀ alkyl group, more preferably a C₁₋₆ alkyl group, and still more preferably a methyl group.

In the above formula, n2 is each independently an integer of 0 to 3 for each (SiR³⁴ₙ₂R³⁵₃₋ₙ₂) unit. However, in the end part of the formula (S4), at least one (SiR³⁴ₙ₂R³⁵₃₋ₙ₂) unit with n2 of 1 to 3 is present. That is, in such an end part, not all n2 are 0 at the same time. In other words, in the end part of the formula (S4), at least one Si atom to which a hydroxyl group or a hydrolyzable group is bonded is present.

n2 is each independently an integer of preferably 1 to 3, more preferably 2 to 3, and still more preferably 3 for each (SiR³⁴ₙ₂R³⁵₃₋ₙ₂) unit.

The above R^{33'} is each independently at each occurrence a hydrogen atom, a hydroxyl group, or a monovalent organic group. Such a monovalent organic group is a monovalent organic group excluding the above hydrolyzable group.

In the above R^{33'}, the monovalent organic group is preferably a C₁₋₂₀ alkyl group or - (CₛH₂ₛ)ₜ₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{33'} is a hydroxyl group.

In another embodiment, R^{33'} is a monovalent organic group, preferably a C₁₋₂₀ alkyl group, and more preferably a C₁₋₆ alkyl group.

The above q2' is each independently at each occurrence an integer of 0 to 3, and the above r2' is each independently at each occurrence an integer of 0 to 3. The sum of q2' and r2' is 3 in the (CR^{32'}_{q2'}R^{33'}_{r2'}) unit.

q2' is each independently an integer of preferably 1 to 3, more preferably 2 to 3, and still more preferably 3 for each (CR^{32'}_{q2'}R^{33'}_{r2'}) unit.

R³² is each independently at each occurrence -Z³-SiR³⁴ₙ₂R³⁵₃₋ₙ₂. Such -Z³-SiR³⁴ₙ₂R³⁵₃₋ₙ₂ has the same definition as described for the above R^{32'}.

The above R³³ is each independently at each occurrence a hydrogen atom, a hydroxyl group, or a monovalent organic group. Such a monovalent organic group is a monovalent organic group excluding the above hydrolyzable group.

In the above R³³, the monovalent organic group is preferably a C₁₋₂₀ alkyl group or -(CₛH₂ₛ)t₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R³³ is a hydroxyl group.

In another embodiment, R³³ is a monovalent organic group, preferably a C₁₋₂₀ alkyl group, and more preferably a C₁₋₆ alkyl group.

The above p2 is each independently at each occurrence an integer of 0 to 3, q2 is each independently at each occurrence an integer of 0 to 3, and r2 is each independently at each occurrence an integer of 0 to 3. The sum of p2, q2, and r2 is 3 in the (CR³¹ₚ₂R³²_{q2}R³³ᵣ₂) unit.

In one embodiment, p2 is 0.

In one embodiment, p2 may be each independently an integer of 1 to 3, an integer of 2 to 3, or 3 for each (CR³¹ₚ₂R³²_{q2}R³³ᵣ₂) unit. In a preferred embodiment, p2 is 3.

In one embodiment, q2 is each independently an integer of 1 to 3, preferably an integer of 2 to 3, and more preferably 3 for each (CR³¹ₚ₂R³²_{q2}R³³ᵣ₂) unit.

In one embodiment, p2 is 0, and q2 is each independently an integer of 1 to 3, preferably an integer of 2 to 3, and still more preferably 3 for each (CR³¹ₚ₂R³²_{q2}R³³ᵣ₂) unit.

The above R^{e1} is each independently at each occurrence -Z³-SiR³⁴ₙ₂R³⁵₃₋ₙ₂. Such -Z³-SiR³⁴ₙ₂R³⁵₃₋ₙ₂ has the same definition as described for the above R^{32'}.

The above R^{f1} is each independently at each occurrence a hydrogen atom, a hydroxyl group, or a monovalent organic group. Such a monovalent organic group is a monovalent organic group excluding the above hydrolyzable group.

In the above R^{f1}, the monovalent organic group is preferably a C₁₋₂₀ alkyl group or - (CₛH₂ₛ)t₁-(O-CₛH₂ₛ)ₜ₂ (wherein s is an integer of 1 to 6, preferably an integer of 2 to 4, t1 is 1 or 0, preferably 0, and t2 is an integer of 1 to 20, preferably an integer of 2 to 10, and more preferably an integer of 2 to 6), more preferably a C₁₋₂₀ alkyl group, still more preferably a C₁₋₆ alkyl group, and particularly preferably a methyl group.

In one embodiment, R^{f1} is a hydroxyl group.

In another embodiment, R^{f1} is a monovalent organic group, preferably a C₁₋₂₀ alkyl group, and more preferably a C₁₋₆ alkyl group.

The above k2 is each independently at each occurrence an integer of 0 to 3, l2 is each independently at each occurrence an integer of 0 to 3, and m2 is each independently at each occurrence an integer of 0 to 3. The sum of k2, l2, and m2 is 3 in the (CR^{d1}ₖ₂R^{e1}ₗ₂R^{f1}ₘ₂) unit.

In one embodiment, in the formula (S4), 2 or more, such as 2 to 27, preferably 2 to 9, more preferably 2 to 6, still more preferably 2 to 3, and particularly preferably 3 (SiR³⁴ₙ₂R³⁵₃₋ₙ₂) units with n2 of 1 to 3, preferably 2 or 3, and more preferably 3 are present in each end part of the formula (S4).

In a preferred embodiment, when R^{32'} is present in the formula (S4), n2 is an integer of 1 to 3, preferably 2 or 3, and more preferably 3 in at least one, preferably all of R^{32'} groups.

In a preferred embodiment, when R³² is present in the formula (S4), n2 is an integer of 1 to 3, preferably 2 or 3, and more preferably 3 in at least one, preferably all of R³² groups.

In a preferred embodiment, when R^{e1} is present in the formula (S4), n2 is an integer of 1 to 3, preferably 2 or 3, and more preferably 3 in at least one, preferably all of R^{a1} groups.

In a preferred embodiment, in the formula (S4), k2 is 0, l2 is 2 or 3, preferably 3, and n2 is 2 or 3, preferably 3.

The above R^{g1} and R^{h1} are each independently at each occurrence -Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂. Here, R¹¹, R¹², R^{a1}, R^{b2}, R^{c1}, R^{d1}, R^{e1}, R^{f1}, n1, k1, l1, m1, k2, l2, and m2 have the same definition as described above.

In a preferred embodiment, R^{g1} and R^{h1} are each independently -Z⁴-SiR¹¹ₙ₁R¹²₃₋ₙ₁.

The above Z⁴ is each independently at each occurrence a single bond, an oxygen atom, or a divalent organic group. The structure denoted as Z⁴ hereinafter is bonded to (SiR¹¹ₙ₁R¹²₃₋ₙ₁) on the right side.

In one embodiment, Z⁴ is an oxygen atom.

In one embodiment, Z⁴ is a divalent organic group.

The above Z⁴ is preferably a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6). Such a C₁₋₆ alkylene group may be linear or branched, but is preferably linear. These groups may be substituted with, for example, one or more substituents selected from a fluorine atom, a C₁₋₆ alkyl group, a C₂₋₆ alkenyl group, and a C₂₋₆ alkynyl group, but are preferably unsubstituted.

In a preferred embodiment, Z⁴ is a C₁₋₆ alkylene group or - (CH₂)_{z7"}-phenylene- (CH₂)_{z8"}-, and preferably -phenylene-(CH₂)_{z8"}-. When Z³ is such a group, light resistance, in particular ultraviolet resistance, can be further enhanced.

In another preferred embodiment, the above Z⁴ is a C₁₋₃ alkylene group. In one embodiment, Z⁴ may be -CH₂CH₂CH₂-. In another embodiment, Z⁴ may be -CH₂CH₂-.

In one embodiment, R^{S1} is a group represented by the formula (S1), (S3), (S4), or (S5). These compounds are capable of forming a surface-treating layer having high abrasion durability.

In one embodiment, R^{S1} is a group represented by the formula (S3), (S4), or (S5). These compounds are capable of forming a surface-treating layer having high abrasion durability.

In one embodiment, R^{S1} is a group represented by the formula (S3) or (S4). These compounds can have a plurality of hydrolyzable groups branched from one Si atom or C atom at one end, and are therefore capable of forming a surface-treating layer having higher abrasion durability.

In one embodiment, R^{S1} is a group represented by the formula (S1). In a preferred embodiment, the formula (S1) is a group represented by the formula (S1-b). In a preferred embodiment, in the formula, R¹³ is a hydrogen atom, X¹¹ is a single bond or -R²⁸-Oₓ-R²⁹- (wherein R²⁸ and R²⁹ are each independently at each occurrence a single bond or a C₁₋₂₀ alkylene group, and x is 0 or 1), and n1 is 1 to 3, preferably 2 to 3, and still more preferably 3.

In one embodiment, R^{S1} is a group represented by the formula (S2). In a preferred embodiment, in the formula, n1 is 1 to 3, preferably 2 to 3, and still more preferably 3.

In one embodiment, R^{S1} is a group represented by the formula (S3). In a preferred embodiment, the formula (S3) is -SiR^{a1}₂R^{c1} or -SiR^{a1}₃, R^{a1} is -Z¹-SiR²²_{q1}R²³ᵣ₁, Z¹ is a C₁₋₆ alkylene group, -(CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6), preferably a C₁₋₆ alkylene group, and q1 is 1 to 3, preferably 2 to 3, and still more preferably 3.

In one embodiment, R^{S1} is a group represented by the formula (S4). In a preferred embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, - (CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n2 is 1 to 3, preferably 2 to 3, and still more preferably 3.

In one embodiment, R^{S1} is a group represented by the formula (S5). In a preferred embodiment, R^{g1} and R^{h1} are - Z⁴-SiR¹¹ₙ₁R¹²₃₋ₙ₁, Z⁴ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6), preferably a C₁₋₆ alkylene group, and n1 is 1 to 3, preferably 2 to 3, and still more preferably 3.

X^{A} is interpreted as a linker connecting the fluoropolyether moiety (R^{F1}), which mainly provides water-repellency, surface lubricity, and the like, to the moiety (R^{S1}) providing a binding ability to a substrate. Accordingly, such X^{A} may be a single bond or any group as long as the compound represented by the formula (1) can stably exist.

In the above formula (1), α is an integer of 1 to 9, and β is an integer of 1 to 9. These α and β may vary depending on the valence of X^{A}. The sum of α and β is the same as the valence of X^{A}. For example, when X^{A} is a decavalent organic group, the sum of α and β is 10; for example, a case where α is 9 and β is 1, α is 5 and β is 5, or α is 1 and β is 9, can be considered. When X^{A} is a divalent organic group, each of α and β is 1.

X^{A} is each independently a single bond or a di- to decavalent organic group.

The di- to decavalent organic group in the above X^{A} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri-to octavalent organic group, and more preferably a tri- to hexavalent organic group.

In one embodiment, X^{A} is a single bond or a divalent organic group, α is 1, and β is 1.

In one embodiment, X^{A} is a tri- to hexavalent organic group, α is 1, and β is 2 to 5.

In one embodiment, X^{A} is a trivalent organic group, α is 1, and β is 2.

When X^{A} is a single bond or a divalent organic group, the formula (1) is represented by the following formula (1').

R^{F1}-X^{A}-R^{S1} (1')

In one embodiment, X^{A} is a single bond.

In another embodiment, X^{A} is a divalent organic group.

In one embodiment, examples of X^{A} include a single bond or a divalent organic group represented by the following formula:

- (R⁵¹)ₚ₅-(X⁵¹)_{q5}-

wherein
R⁵¹ is a single bond, -(CH₂)ₛ₅-, or an o-, m-, or p-phenylene group, and is preferably -(CH₂)ₛ₅-;
s5 is an integer of 1 to 20, preferably 1 to 6, more preferably 1 to 3, and still more preferably 1 or 2;
X⁵¹ is - (X⁵²)ₗ₅-;
X⁵² is each independently at each occurrence a group selected from the group consisting of -O-, -S-, an o-, m-, or p-phenylene group, -CO-, -C(O)O-, -Si(R⁵³)₂-, - (Si(R⁵³)₂O)ₘ₅-Si(R⁵³)₂-, -CONR⁵⁴-, -O-CONR⁵⁴-, -NR⁵⁴-, and - (CH₂)ₙ₅-;
R⁵³ is each independently at each occurrence a monovalent organic group, and is preferably a phenyl group, a C₁₋₆ alkyl group, or a C₁₋₆ alkoxy group, more preferably a phenyl group or a C₁₋₆ alkyl group, and more preferably a methyl group;
R⁵⁴ is each independently at each occurrence a hydrogen atom or a monovalent organic group, and is preferably a hydrogen atom, a phenyl group, a C₁₋₆ alkyl group (preferably a methyl group), or an oxyalkylene-containing group having 1 to 10 carbon atoms;
m5 is each independently at each occurrence an integer of 1 to 100 and preferably an integer of 1 to 20;
n5 is each independently at each occurrence an integer of 1 to 20, preferably an integer of 1 to 6, and more preferably an integer of 1 to 3;
l5 is an integer of 1 to 10, preferably an integer of 1 to 5, and more preferably an integer of 1 to 3;
p5 is 0 or 1; and
q5 is 0 or 1,
where at least one of p5 and q5 is 1, and the occurrence order of the respective repeating units enclosed in parentheses provided with p5 or q5 is not limited.
Here, X^{A} (typically a hydrogen atom of X^{A}) may be substituted with one or more substituents selected from a fluorine atom, a C₁₋₃ alkyl group, and a C₁₋₃ fluoroalkyl group. In a preferred embodiment, X^{A} is not substituted with any of these groups.

The above oxyalkylene-containing group having 1 to 10 carbon atoms is a group containing -O-C₁₋₁₀ alkylene-, such as -R⁵⁵-(-O-C₁₋₁₀ alkylene)ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a hydrogen atom or a monovalent organic group, preferably a C₁₋₆ alkyl group). The above alkylene group may be linear or branched.

In a preferred embodiment, the above X^{A} is each independently -(R⁵¹)ₚ₅-(X⁵¹)_{q5}-R⁵²-. R⁵² is a single bond, - (CH₂)ₜ₅-, or an o-, m-, or p-phenylene group, and is preferably - (CH₂)t₅-. t5 is an integer of 1 to 20, preferably an integer of 2 to 6, and more preferably an integer of 2 to 3. Here, R⁵² (typically a hydrogen atom of R⁵²) may be substituted with one or more substituents selected from a fluorine atom, a C₁₋₃ alkyl group, and a C₁₋₃ fluoroalkyl group. In a preferred embodiment, R⁵⁶ is not substituted with any of these groups.

Preferably, the above X^{A} may be each independently
a single bond,
a C₁₋₂₀ alkylene group, or

   -R⁵¹-X⁵³-R⁵²-,
wherein R⁵¹ and R⁵² have the same definition as described above, and
   X⁵³ is

   -O-,

   -S-,

   -CO-,

   -C(O)O-,

   -CONR⁵⁴-,

   -O-CONR⁵⁴-,

   -O-(CH₂)ᵤ₅-CONR⁵⁴-,

   -O-(CH₂)ᵤ₅-CO-,

   -Si(R⁵³)₂-,

   -(Si(R⁵³)₂O)ₘ₅-Si(R⁵³)₂-,

   -O-(CH₂)ᵤ₅-(Si (R⁵³)₂O)ₘ₅-Si(R⁵³)₂-,

   -O-(CH₂)ᵤ₅-Si(R⁵³)2-O-Si(R⁵³)₂-CH₂CH₂-Si(R⁵³)₂-O-Si(R⁵³)₂-,

   -O-(CH₂)ᵤ₅-Si(OCH₃)₂OSi(OCH₃)₂-,

   -CONR⁵⁴-(CH₂)ᵤ₅-(Si(R⁵³)₂O)ₘ₅-Si(R⁵³)₂-,

   -CONR⁵⁴-(CH₂)ᵤ₅-N(R⁵⁴)-,

   or

   -CONR⁵⁴- (o-, m- or p-phenylene) -Si(R⁵³)₂-

   (wherein R⁵³, R⁵⁴, and m5 have the same definition as described above, and
   u5 is an integer of 1 to 20, preferably an integer of 2 to 6, and more preferably an integer of 2 to 3.).

More preferably, the above X^{A} is each independently
a single bond,
a C₁₋₂₀ alkylene group,

   - (CH₂)ₛ₅-X⁵³-,

   -X⁵³-(CH₂)ₜ₅-,

   or

   -(CH₂)ₛ₅-X⁵³-(CH₂)ₜ₅-,
wherein X⁵³, s5, and t5 have the same definition as described above.

In a preferred embodiment, the above X^{A} may be each independently
a single bond,
a C₁₋₂₀ alkylene group,

   - (CH₂)ₛ₅-X⁵³-,

   -X⁵³-(CH₂)ₜ₅-, or

   -(CH₂)ₛ₅-X⁵³-(CH₂)ₜ₅-,

   wherein
   X⁵³ is -O-, -CO-, -CONR⁵⁴-, -O-CONR⁵⁴-, -O-(CH₂)ᵤ₅-CONR⁵⁴-, or -O-(CH₂)ᵤ₅-CO-,
   R⁵⁴ is each independently at each occurrence a hydrogen atom, a phenyl group, a C₁₋₆ alkyl group (preferably a methyl group), or an oxyalkylene-containing group having 1 to 10 carbon atoms,
   s5 is an integer of 1 to 20,
   t5 is an integer of 1 to 20, and
   u5 is an integer of 1 to 20.

In a preferred embodiment, the above X^{A} may be each independently

-(CH₂)ₛ₅-O-(CH₂)ₜ₅-,

-CONR⁵⁴-(CH₂)t₅-,

- (CH₂)ₛ₅-O-(CH₂)ᵤ₅-CO-, or

-(CH₂)ₛ₅-O-(CH₂)ᵤ₅-CONR⁵⁴-(CH₂)ₜ₅-,

wherein
R⁵⁴ is each independently at each occurrence a hydrogen atom, a phenyl group, a C₁₋₆ alkyl group (preferably a methyl group), or an oxyalkylene-containing group having 1 to 10 carbon atoms,
s5 is an integer of 1 to 20,
t5 is an integer of 1 to 20, and
u5 is an integer of 1 to 20.

The above X^{A} may be each independently substituted with one or more substituents selected from a fluorine atom, a C₁₋₃ alkyl group, and a C₁₋₃ fluoroalkyl group (preferably a C₁₋₃ perfluoroalkyl group). In one embodiment, X^{A} is unsubstituted.

The above X^{A} is bonded to R^{F1} on the left side, and bonded to R^{S1} on the right side.

In one embodiment, X^{A} may be each independently a group other than a -O-C₁₋₆ alkylene group and a C₁₋₆ alkylene group-O-C₁₋₆ alkylene group.

In another embodiment, examples of X^{A} include the following groups: 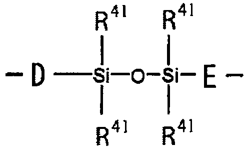 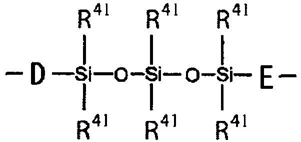 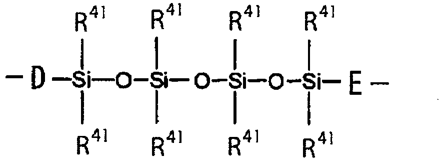 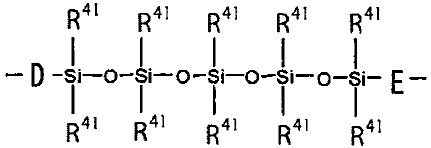 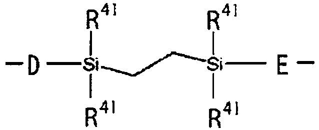 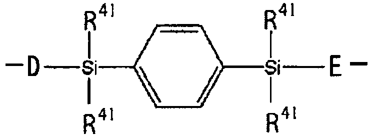 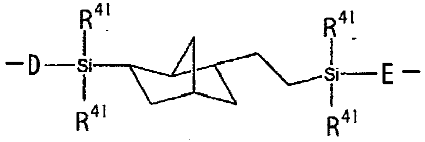 wherein R⁴¹ is each independently a hydrogen atom, a phenyl group, an alkyl group having 1 to 6 carbon atoms, or a C₁₋₆ alkoxy group, and preferably a methyl group;
D is a group selected from

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃- (wherein Ph means phenyl),

   and 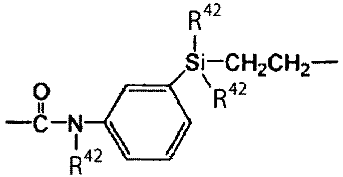 (wherein R⁴² each independently represents a hydrogen atom, a C₁₋₆ alkyl group, or a C₁₋₆ alkoxy group, preferably a methyl group or a methoxy group, and more preferably a methyl group);
E is -(CH₂)ₙ- (n is an integer of 2 to 6); and
D is bonded to R^{F1} of the molecular backbone, and E is bonded to R^{S1}.

Specific examples of the above X^{A} include:
a single bond,

-CH₂OCH₂-,

-CH₂O(CH₂)₂-,

-CH₂O(CH₂)₃-,

-CH₂O(CH₂)₄-,

-CH₂O(CH₂)₅-,

-CH₂O(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂OSi(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

CH₂OCH₂(CH₂)₇CH₂Si(OCH₃)₂OSi(OCH₃)₂(CH₂)₂Si(OCH₃)₂OSi(OCH₃)₂(CH₂ )₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

- (CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CO-,

-CONH-,

-CONH-CH₂-,

-CONH-(CH₂)₂-,

-CONH-(CH₂)₃-,

-CONH-(CH₂)₄-,

-CONH-(CH₂)₅-,

-CONH-(CH₂)₆-,

-CON(CH₃)-CH₂-,

-CON(CH₃)-(CH₂)₂-,

-CON(CH₃)-(CH₂)₃-,

-CON(CH₃)-(CH₂)₄-,

-CON(CH₃)-(CH₂)₅-,

-CON(CH₃)-(CH₂)₆-,

-CON(Ph)-CH₂-

(wherein Ph means phenyl),

-CON(Ph)-(CH₂)₂-

(wherein Ph means phenyl),

-CON(Ph)-(CH₂)₃-

(wherein Ph means phenyl),

-CON(Ph)-(CH₂)₄-

(wherein Ph means phenyl),

-CON(Ph)-(CH₂)₅-

(wherein Ph means phenyl),

-CON(Ph)-(CH₂)₆-

(wherein Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-CH₂OCH₂-CONH-CH₂-,

-CH₂OCH₂-CONH-(CH₂)₂-,

-CH₂OCH₂-CONH-(CH₂)₃-,

-CH₂OCH₂-CONH-(CH₂)₄-,

-CH₂OCH₂-CONH-(CH₂)₅-,

-CH₂OCH₂-CONH-(CH₂)₆-,

-CH₂OCH₂-CO-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂OSi(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

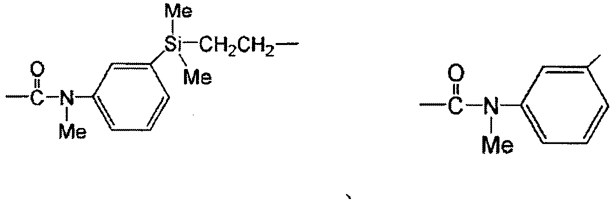

In still another embodiment, X^{A} is each independently a group represented by the formula: -(R¹⁶)ₓ₁-(CFR¹⁷)_{y1}-(CH₂)_{z1}-. In the formula, x1, y1, and z1 are each independently an integer of 0 to 10, the sum of x1, y1, and z1 is 1 or more, and the occurrence order of the respective repeating units enclosed in parentheses is not limited in the formula.

In the above formula, R¹⁶ is each independently at each occurrence an oxygen atom, phenylene, carbazolylene, -NR¹⁸-(wherein R¹⁸ represents a hydrogen atom or an organic group), or a divalent organic group. Preferably, R¹⁸ is an oxygen atom or a divalent polar group.

The above "divalent polar group" is not limited, and examples thereof include -C(O)-, -C(=NR¹⁹)-, and -C(O)NR¹⁹-(wherein R¹⁹ represents a hydrogen atom or a lower alkyl group). The "lower alkyl group" is, for example, an alkyl group having 1 to 6 carbon atoms, such as methyl, ethyl, and n-propyl, and they are optionally substituted with one or more fluorine atoms.

In the above formula, R¹⁷ is each independently at each occurrence a hydrogen atom, a fluorine atom, or a lower fluoroalkyl group, and is preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or a pentafluoroethyl group, and still more preferably a trifluoromethyl group.

In still another embodiment, examples of X^{A} include the following groups: 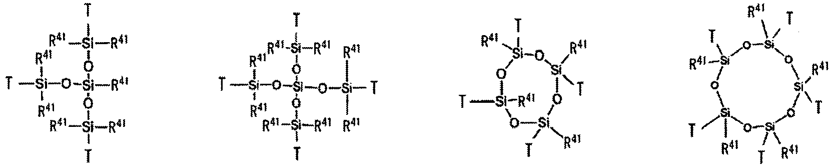 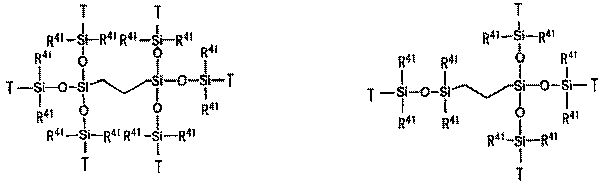 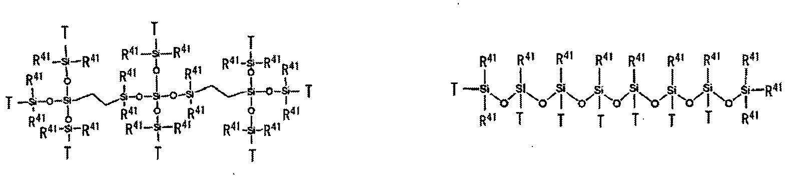 wherein
R⁴¹ is each independently a hydrogen atom, a phenyl group, an alkyl group having 1 to 6 carbon atoms, or a C₁₋₆ alkoxy group, and is preferably a methyl group;
some of the groups of T in each X^{A} group are the following groups bonded to R^{F1} or R^{F2} of the molecular backbone:

   -CH₂O(CH₂)₂-,

   -CH₂O(CH₂)₃-,

   -CF₂O(CH₂)₃-,

   - (CH₂)₂-,

   - (CH₂)₃-,

   - (CH₂)₄-,

   -CONH-(CH₂)₃-,

   -CON(CH₃)-(CH₂)₃-,

   -CON(Ph)-(CH₂)₃-

   (wherein Ph means phenyl), or 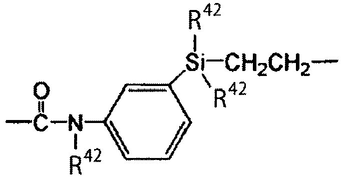
   wherein R⁴² each independently represents a hydrogen atom, a C₁₋₆ alkyl group, or a C₁₋₆ alkoxy group, preferably a methyl group or a methoxy group, and more preferably a methyl group; and
   some other groups of T are bonded to R^{Si} of the molecular backbone, and the remaining groups of T, if present, are each independently a methyl group, a phenyl group, a C₁₋₆ alkoxy group, or a radical scavenging group or an UV absorbing group.

The radical scavenging group is not limited as long as it can scavenge a radical generated by light irradiation, and examples thereof include residues of benzophenones, benzotriazoles, benzoates, phenyl salicylates, crotonic acids, malonates, organoacrylates, hindered amines, hindered phenols, and triazines.

The UV absorbing group is not limited as long as it can absorb ultraviolet rays, and examples thereof include residues of benzotriazoles, hydroxybenzophenones, esters of substituted and unsubstituted benzoic acid or salicylic acid compounds, acrylates or alkoxy cinnamates, oxamides, oxanilides, benzoxazinones, and benzoxazoles.

In a preferred embodiment, examples of the preferred radical scavenging group or UV absorbing group include: 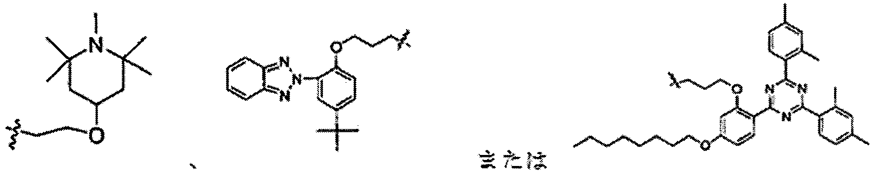 #1 or

In this embodiment, X^{A} may be each independently a tri-to decavalent organic group.

In still another embodiment, examples of X^{A} include the following group: 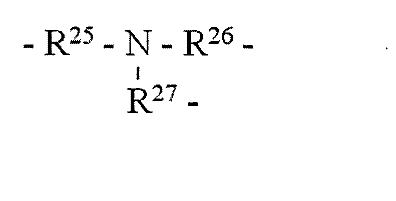 wherein R²⁵, R²⁶, and R²⁷ are each independently a di- to hexavalent organic group; and
R²⁵ is bonded to at least one R^{F1}, and R²⁶ and R²⁷ are each bonded to at least one R^{Si}.

In one embodiment, the above R²⁵ is a single bond, a C₁₋₂₀ alkylene group, a C₃₋₂₀ cycloalkylene group, a C₅₋₂₀ arylene group, -R⁵⁷-X⁵⁸-R⁵⁹-, -X⁵⁸-R⁵⁹-, or -R⁵⁷-X⁵⁸-. The above R⁵⁷ and R⁵⁹ are each independently a single bond, a C₁₋₂₀ alkylene group, a C₃₋₂₀ cycloalkylene group, or a C₅₋₂₀ arylene group. The above X⁵⁸ is -O-, -S-, -CO-, -O-CO-, or -COO-.

In one embodiment, the above R²⁶ and R²⁷ are each independently a hydrocarbon, or a group having at least one atom selected from N, O, and S at the end or in the main chain of a hydrocarbon, and preferred examples thereof include a C₁₋₆ alkyl group, -R³⁶-R³⁷-R³⁶, and -R³⁶-CHR³⁸₂-. Here, R³⁶ is each independently a single bond or an alkyl group having 1 to 6 carbon atoms, preferably an alkyl group having 1 to 6 carbon atoms. R³⁷ is N, O, or S, preferably N or O. R³⁸ is -R⁴⁵-R⁴⁶-R⁴⁵-, -R⁴⁶-R⁴⁵-, or -R⁴⁵-R⁴⁶-. Here, R⁴⁵ is each independently an alkyl group having 1 to 6 carbon atoms. R⁴⁶ is N, O, or S, preferably O.

In this embodiment, X^{A} may be each independently a tri-to decavalent organic group.

The fluoropolyether group-containing compound represented by the above formula (1) is not limited, and it may have a number average molecular weight of 5 × 10² to 1 × 10⁵. In particular, the number average molecular weight is preferably 1,000 to 30,000, more preferably 1,500 to 10,000, from the viewpoint of abrasion durability. The "number average molecular weight" is defined as a value obtained by ¹⁹F-NMR measurement.

The above fluoropolyether group-containing silane compound (A) can be synthesized by known methods.

### [Fluoropolyether group-containing silane compound (B)]

The fluoropolyether group-containing silane compound
(B) is represented by the following formula (2):

**R^{S2}_{γ}-X^{B}-R^{F2}-X^{B}-R^{S2}_{γ}** **(2)**

wherein
R^{F2} is -Rf²ₚ-R^{FB}-O_{q}-;
Rf² is a C₁₋₆ alkylene group optionally substituted with one or more fluorine atoms;
R^{FB} is each independently at each occurrence a linear fluoropolyether group;
p is 0 or 1;
q is each independently at each occurrence 0 or 1;
R^{S2} is each independently at each occurrence a Si atom-containing group having a hydroxyl group or a hydrolyzable group;
X^{B} is each independently a single bond or a di- to decavalent organic group; and
γ is each independently an integer of 1 to 9.

R^{F2} is -Rf²ₚ-R^{FB}-O_{q}-.

In the above formula, Rf² is a C₁₋₆ alkylene group optionally substituted with one or more fluorine atoms.

In the above C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

The above R^{f2} is preferably a C₁₋₆ alkylene group substituted with one or more fluorine atoms, more preferably a C₁₋₆ perfluoroalkylene group, and still more preferably a C₁₋₃ perfluoroalkylene group.

The above C₁₋₆ perfluoroalkylene group may be linear or branched, and is preferably a linear or branched C₁₋₃ perfluoroalkylene group, more preferably a linear C₁₋₃ perfluoroalkyl group, and specifically -CF₂-, -CF₂CF₂-, or - CF₂CF₂CF₂-.

In the above formula, p is 0 or 1. In one embodiment, p is 0. In another embodiment, p is 1.

In the above formula, q is each independently at each occurrence 0 or 1. In one embodiment, q is 0. In another embodiment, q is 1.

In the above formula, R^{FB} is a linear fluoropolyether group.

The above fluoropolyether group is typically a group represented by the above formula (f0).

In the above formula (2), R^{FB} is, each independently at each occurrence, preferably a group represented by the formula (f0) in which all repeating units are linear.

In a preferred embodiment, R^{FB} is each independently at each occurrence a linear group represented by the above formula (f1), (f2), (f3), (f4), (f5), or (f6) .

In a preferred embodiment, R^{FB} is each independently at each occurrence a group represented by the following formula (f2b) :

-(OCF₂CF₂CF₂CF₂)_{c}-(OCF₂CF₂CF₂)_{d}-(OCF₂CF₂)ₑ-(OCF₂)_{f}- (f2b)

wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with the subscript c, d, e, or f is not limited in the formula.

R^{S2} is each independently at each occurrence a Si atom-containing group having a hydroxyl group or a hydrolyzable group. R^{S2} can have the same definition as the group described for the above R^{S1}, and includes the same embodiments.

In a preferred embodiment, R^{S2} is preferably, each independently at each occurrence, a group represented by the above formula (S1), (S2), (S3), (S4), or (S5) .

In one embodiment, R^{S2} is a group represented by the formula (S1), (S3), (S4), or (S5). These compounds are capable of forming a surface-treating layer having high abrasion durability.

In one embodiment, R^{S2} is a group represented by the formula (S3), (S4), or (S5). These compounds are capable of forming a surface-treating layer having high abrasion durability.

In one embodiment, R^{S2} is a group represented by the formula (S3) or (S4). These compounds can have a plurality of hydrolyzable groups branched from one Si atom or C atom at one end, and are therefore capable of forming a surface-treating layer having higher abrasion durability.

In one embodiment, R^{S2} is a group represented by the formula (S1). In a preferred embodiment, the formula (S1) is a group represented by the formula (S1-b) . In a preferred embodiment, in the formula, R¹³ is a hydrogen atom, X¹¹ is a single bond or -R²⁸-Oₓ-R²⁹- (wherein R²⁸ and R²⁹ are each independently at each occurrence a single bond or a C₁₋₂₀ alkylene group, and x is 0 or 1), and n1 is 1 to 3, preferably 2 to 3, and still more preferably 3.

In one embodiment, R^{S2} is a group represented by the formula (S2). In a preferred embodiment, in the formula, n1 is 1 to 3, preferably 2 to 3, and still more preferably 3.

In one embodiment, R^{S2} is a group represented by the formula (S3). In a preferred embodiment, the formula (S3) is -SiR^{a1}2R^{c1} or -SiR^{a1}₃, R^{a1} is -Z¹-SiR²²_{q1}R²³ᵣ₁, Z¹ is a C₁₋₆ alkylene group, - (CH₂)_{z1}-O-(CH₂)_{z2}- (wherein z1 is an integer of 0 to 6, such as an integer of 1 to 6, and z2 is an integer of 0 to 6, such as an integer of 1 to 6), or -(CH₂)_{z3}-phenylene-(CH₂)_{z4}- (wherein z3 is an integer of 0 to 6, such as an integer of 1 to 6, and z4 is an integer of 0 to 6, such as an integer of 1 to 6), preferably a C₁₋₆ alkylene group, and q1 is 1 to 3, preferably 2 to 3, and still more preferably 3.

In one embodiment, R^{S2} is a group represented by the formula (S4). In a preferred embodiment, the formula (S4) is -CR^{e1}₂R^{f1} or -CR^{e1}₃, R^{e1} is -Z³-SiR³⁴ₙ₂R³⁵₃₋ₙ₂, Z³ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or - (CH₂)_{z7"}-phenylene-(CH₂)_{z8"}- (wherein z7" is an integer of 0 to 6, such as an integer of 1 to 6, and z8" is an integer of 0 to 6, such as an integer of 1 to 6), preferably a C₁₋₆ alkylene group, and n2 is 1 to 3, preferably 2 to 3, and still more preferably 3.

In one embodiment, R^{S2} is a group represented by the formula (S5) . In a preferred embodiment, R^{g1} and R^{h1} are - Z⁴-SiR¹¹ₙ₁R¹²₃₋ₙ₁, Z⁴ is a C₁₋₆ alkylene group, -(CH₂)_{z5"}-O-(CH₂)_{z6"}- (wherein z5" is an integer of 0 to 6, such as an integer of 1 to 6, and z6" is an integer of 0 to 6, such as an integer of 1 to 6), or -(CH₂)_{z7"}-phenylene-(CH₂)_{z8"}-(wherein z7" is an integer of 0 to 6, such as an integer of 1 to 6, and z8" is an integer of 0 to 6, such as an integer of 1 to 6), preferably a C₁₋₆ alkylene group, and n1 is 1 to 3, preferably 2 to 3, and still more preferably 3.

X^{B} is interpreted as a linker connecting the fluoropolyether moiety (R^{F2}), which mainly provides water-repellency, surface lubricity, and the like, to the moiety (R^{S2}) providing a binding ability to a substrate. Accordingly, such X^{B} may be a single bond or any group as long as the compound represented by the formula (2) can stably exist.

In the above formula (2), γ is an integer of 1 to 9. γ may vary according to the valence of X^{B}. That is, γ is a value obtained by subtracting 1 from the valence of X^{B}.

X^{B} is each independently a single bond or a di- to decavalent organic group.

The di- to decavalent organic group in the above X^{B} is preferably a di- to octavalent organic group. In one embodiment, such a di- to decavalent organic group is preferably a di- to tetravalent organic group, and more preferably a divalent organic group. In another embodiment, such a di- to decavalent organic group is preferably a tri-to octavalent organic group, and more preferably a tri- to hexavalent organic group.

In one embodiment, X^{B} is a single bond or a divalent organic group, α is 1, and β is 1.

In one embodiment, X^{B} is a single bond or a divalent organic group, and γ is 1.

In one embodiment, X^{B} is a tri- to hexavalent organic group, and γ is 2 to 5.

In one embodiment, X^{B} is a trivalent organic group, and γ is 2.

When X^{B} is a single bond or a divalent organic group, the formula (2) is represented by the following formula (2').

**R^{S2}-X^{B}-R^{F2}-X^{B}-R^{S2}** **(2')**

X^{B} can have the same definition as the group described above for X^{A}, and includes the same embodiments. Each group described as X^{B} is bonded to R^{F2} of the formula (2) on the left side, and bonded to R^{S2} of the formula (2) on the right side.

In one embodiment, X^{B} is a single bond.

In another embodiment, X^{B} is a divalent organic group.

In one embodiment, examples of X^{B} include a single bond or a divalent organic group represented by the following formula:

-(R⁵¹)ₚ₅-(X⁵¹)_{q5}-

wherein
R⁵¹ is a single bond, -(CH₂)ₛ₅-, or an o-, m-, or p-phenylene group, and is preferably -(CH₂)ₛ₅-;
s5 is an integer of 1 to 20, preferably 1 to 6, more preferably 1 to 3, and still more preferably 1 or 2;
X⁵¹ is -(X⁵²)₁₅-;
X⁵² is each independently at each occurrence a group selected from the group consisting of -O-, -S-, an o-, m-, or p-phenylene group, -CO-, -C(O)O-, -si(R⁵³)₂-, - (Si(R⁵³)₂O)ₘ₅-Si(R⁵³)₂-, -CONR⁵⁴-, -O-CONR⁵⁴-, -NR⁵⁴-, and - (CH₂)ₙ₅-;
R⁵³ is each independently at each occurrence a monovalent organic group, and is preferably a phenyl group, a C₁₋₆ alkyl group, or a C₁₋₆ alkoxy group, more preferably a phenyl group or a C₁₋₆ alkyl group, and more preferably a methyl group;
R⁵⁴ is each independently at each occurrence a hydrogen atom or a monovalent organic group, and is preferably a hydrogen atom, a phenyl group, a C₁₋₆ alkyl group (preferably a methyl group), or an oxyalkylene-containing group having 1 to 10 carbon atoms;
m5 is each independently at each occurrence an integer of 1 to 100 and preferably an integer of 1 to 20;
n5 is each independently at each occurrence an integer of 1 to 20, preferably an integer of 1 to 6, and more preferably an integer of 1 to 3;
l5 is an integer of 1 to 10, preferably an integer of 1 to 5, and more preferably an integer of 1 to 3;
p5 is 0 or 1; and
q5 is 0 or 1,
where at least one of p5 and q5 is 1, and the occurrence order of the respective repeating units enclosed in parentheses provided with p5 or q5 is not limited.
Here, X^{B} (typically a hydrogen atom of X^{B}) may be substituted with one or more substituents selected from a fluorine atom, a C₁₋₃ alkyl group, and a C₁₋₃ fluoroalkyl group. In a preferred embodiment, X^{B} is not substituted with any of these groups.

The above oxyalkylene-containing group having 1 to 10 carbon atoms is a group containing -O-C₁₋₁₀ alkylene-, such as -R⁵⁵-(-O-C₁₋₁₀ alkylene) ₙ-R⁵⁶ (wherein R⁵⁵ is a single bond or a divalent organic group, preferably a C₁₋₆ alkylene group, n is an arbitrary integer, preferably an integer of 2 to 10, and R⁵⁶ is a monovalent organic group, preferably a C₁₋₆ alkyl group). The above alkylene group may be linear or branched.

In a preferred embodiment, the above X^{B} is each independently -(R⁵¹)ₚ₅-(X⁵¹)_{q5}-R⁵²-. R⁵² is a single bond, - (CH₂)ₜ₅-, or an o-, m-, or p-phenylene group, and is preferably -(CH₂)ₜ₅-. t5 is an integer of 1 to 20, preferably an integer of 2 to 6, and more preferably an integer of 2 to 3. Here, R⁵² (typically a hydrogen atom of R⁵²) may be substituted with one or more substituents selected from a fluorine atom, a C₁₋₃ alkyl group, and a C₁₋₃ fluoroalkyl group. In a preferred embodiment, R⁵⁶ is not substituted with any of these groups.

Preferably, the above X^{B} may be each independently a single bond,
a C₁₋₂₀ alkylene group, or

   -R⁵¹-X⁵³-R⁵²-,
wherein R⁵¹ and R⁵² have the same definition as described above, and
   X⁵³ is

   -O-,

   -S-,

   -CO-,

   -C(O)O-,

   -CONR⁵⁴-,

   -O-CONR⁵⁴-,

   -O-(CH₂)ᵤ₅-CONR⁵⁴-,

   -O-(CH₂)ₙ₅-CO-,

   -Si(R⁵³)₂-,

   -(Si(R⁵³)₂O)ₘ₅-Si(R⁵³)₂-,

   -O-(CH₂)ᵤ₅-(Si(R⁵³)₂O)ₘ₅-Si(R⁵³)₂-,

   -O-(CH₂)ₙ₅-Si(R⁵³)₂-O-Si(R⁵³)₂-CH₂CH₂-Si(R⁵³)₂-O-Si(R⁵³)₂-,

   -O-(CH₂)ᵤ₅-Si(OCH₃)₂OSi(OCH₃)₂-,

   -CONR⁵⁴-(CH₂)ᵤ₅-(Si(R⁵³)₂O)ₘ₅-Si(R⁵³)₂-,

   -CONR⁵⁴-(CH₂)ₙ₅-N(R⁵⁴)-,

   or

   -CONR⁵⁴- (o-, m- or p-phenylene) -Si(R⁵³)₂-

   (wherein R⁵³, R⁵⁴, and m5 have the same definition as described above, and
u5 is an integer of 1 to 20, preferably an integer of 2 to 6, and more preferably an integer of 2 to 3.).

More preferably, the above X^{B} is each independently
a single bond,
a C₁₋₂₀ alkylene group,

   -(CH₂)ₛ₅-X⁵³-,

   -X⁵³-(CH₂)ₜ₅-,

   or

   -(CH₂)ₛ₅-X⁵³-(CH₂)ₜ₅-,
wherein X⁵³, s5, and t5 have the same definition as described above.

In a preferred embodiment, the above X^{B} may be each independently
a single bond,
a C₁₋₂₀ alkylene group,

   -(CH₂)ₛ₅-X⁵³-,

   -X⁵³-(CH₂)ₜ₅-,

   or

   -(CH₂)ₛ₅-X⁵³-(CH₂)ₜ₅-,

   wherein
   X⁵³ is -O-, -CO-, -CONR⁵⁴-, -O-CONR⁵⁴-, -O-(CH₂)ᵤ₅-CONR⁵⁴-, or -O-(CH₂)ᵤ₅-CO-, wherein
   R⁵⁴ is each independently at each occurrence a hydrogen atom, a phenyl group, a C₁₋₆ alkyl group (preferably a methyl group), or an oxyalkylene-containing group having 1 to 10 carbon atoms,
   s5 is an integer of 1 to 20,
   t5 is an integer of 1 to 20, and
   u5 is an integer of 1 to 20.

In a preferred embodiment, the above X^{B} may be each independently

-(CH₂)ₛ₅-O-(CH₂)ₜ₅-,

-CONR⁵⁴-(CH₂)ₜ₅-,

- (CH₂)ₛ₅-O-(CH₂)ᵤ₅-CO-,

or

- (CH₂)ₛ₅-O-(CH₂)ᵤ₅-CONR⁵⁴-(CH₂)ₜ₅-,

wherein
R⁵⁴ is each independently at each occurrence a hydrogen atom, a phenyl group, a C₁₋₆ alkyl group (preferably a methyl group), or an oxyalkylene-containing group having 1 to 10 carbon atoms,
s5 is an integer of 1 to 20,
t5 is an integer of 1 to 20, and
u5 is an integer of 1 to 20.

The above X^{B} may be each independently substituted with one or more substituents selected from a fluorine atom, a C₁₋₃ alkyl group, and a C₁₋₃ fluoroalkyl group (preferably a C₁₋₃ perfluoroalkyl group). In one embodiment, X^{B} is unsubstituted.

The above X^{B} is bonded to R^{F1} on the left side, and bonded to R^{S1} on the right side.

In one embodiment, X^{B} may be each independently a group other than a -O-C₁₋₆ alkylene group and a C₁₋₆ alkylene group-O-C₁₋₆ alkylene group.

Specific examples of the above X^{B} include:
a single bond,

-CH₂OCH₂-,

-CH₂O(CH₂)₂-,

-CH₂O(CH₂)₃-,

-CH₂O(CH₂)₄-,

-CH₂O(CH₂)₅-,

-CH₂O(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂OSi(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

CH₂OCH₂(CH₂)₇CH₂Si(OCH₃)₂OSi(OCH₃)₂(CH₂)₂Si(OCH₃)₂OSi(OCH₃)₂(CH₂ )₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

- (CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CO-,

-CONH-,

-CONH-CH₂-,

-CONH-(CH₂)₂-,

-CONH-(CH₂)₃-,

-CONH-(CH₂)₄-,

-CONH-(CH₂)₅-,

-CONH-(CH₂)₆-,

-CON(CH₃)-CH₂-,

-CON(CH₃)-(CH₂)₂-,

-CON(CH₃)-(CH₂)₃-,

-CON(CH₃)-(CH₂)₄-,

-CON(CH₃)-(CH₂)₅-,

-CON(CH₃)-(CH₂)₆-,

-CON(Ph)-CH₂-

(wherein Ph means phenyl),

-CON(Ph)-(CH₂)₂-

(wherein Ph means phenyl),

-CON(Ph)-(CH₂)₃-

(wherein Ph means phenyl),

-CON(Ph)-(CH₂)₄-

(wherein Ph means phenyl),

-CON(Ph)-(CH₂)₅-

(wherein Ph means phenyl),

-CON(Ph)-(CH₂)₆-

(wherein Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-CH₂OCH₂-CONH-CH₂-,

-CH₂OCH₂-CONH-(CH₂)₂-,

-CH₂OCH₂-CONH-(CH₂)₃-,

-CH₂OCH₂-CONH-(CH₂)₄-,

-CH₂OCH₂-CONH-(CH₂)₅-,

-CH₂OCH₂-CONH-(CH₂)₆-,

-CH₂OCH₂-CO-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂OSi(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

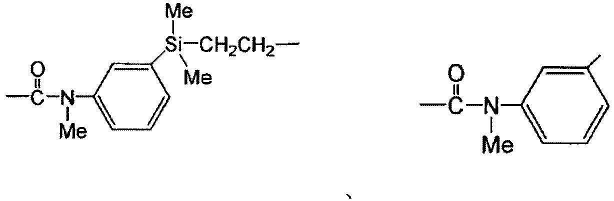

The fluoropolyether group-containing compound represented by the above formula (2) is not limited, and it may have a number average molecular weight of 5 × 10² to 1 × 10⁵. In particular, the number average molecular weight is preferably 1,000 to 30,000, more preferably 1,500 to 10,000, from the viewpoint of abrasion durability. The "number average molecular weight" is defined as a value obtained by ¹⁹F-NMR measurement.

The above fluoropolyether group-containing silane compound (B) can be synthesized by known methods.

In a preferred embodiment, in the fluoropolyether group-containing silane compound (A), R^{FA} is a group represented by the formula (fla), and in the fluoropolyether group-containing silane compound (B), R^{FB} is a group represented by the formula (f2b). When the fluoropolyether group-containing silane compound (A) and the fluoropolyether group-containing silane compound (B) have the above fluoropolyether groups, the abrasion durability and ultraviolet resistance of a surface-treating layer to be formed are enhanced.

In a more preferred embodiment, in the fluoropolyether group-containing silane compound (A), R^{FA} is a group represented by the formula (f1a) and R^{S1} is a group represented by the formula (S3), (S4), or (S5), and in the fluoropolyether group-containing silane compound (B), R^{FB} is a group represented by the formula (f2b) and R^{S2} is a group represented by the formula (S3), (S4), or (S5). When the fluoropolyether group-containing silane compound (A) and the fluoropolyether group-containing silane compound (B) have the above fluoropolyether groups and hydrolyzable silane groups, the abrasion durability and ultraviolet resistance of a surface-treating layer to be formed are enhanced.

In the surface-treating agent of the present disclosure, the content of the fluoropolyether group-containing silane compound (A) is preferably 50 mol% or more, more preferably 60 mol% or more, and still more preferably 70 mol% or more based on the total of the fluoropolyether group-containing silane compound (A) and the fluoropolyether group-containing silane compound (B). When the content of the fluoropolyether group-containing silane compound (A) is 50 mol% or more, the ultraviolet resistance of a surface-treating layer to be formed is enhanced.

In the surface-treating agent of the present disclosure, the content of the fluoropolyether group-containing silane compound (A) is preferably 95 mol% or less, and more preferably 90 mol% or less, such as 80 mol% or more, based on the total of the fluoropolyether group-containing silane compound (A) and the fluoropolyether group-containing silane compound (B). When the upper limit of the content of the fluoropolyether group-containing silane compound (A) falls within the above range, the abrasion durability of a surface-treating layer to be formed is enhanced.

In a preferred embodiment, the content of the fluoropolyether group-containing silane compound (A) is preferably 50 to 95 mol%, more preferably 60 to 90 mol%, and still more preferably 70 to 90 mol% based on the total of the fluoropolyether group-containing silane compound (A) and the fluoropolyether group-containing silane compound (B).

The above surface-treating agent may comprise other components in addition to the fluoropolyether group-containing silane compound (A) and the fluoropolyether group-containing silane compound (B) (hereinafter, also collectively referred to as the "fluoropolyether group-containing silane compounds of the present disclosure"). Such other components are not limited, and examples thereof include a (unreactive) fluoropolyether compound which can be understood as a fluorine-containing oil, preferably a perfluoro(poly)ether compound (hereinafter, referred to as "fluorine-containing oil"), a (unreactive) silicone compound which can be understood as a silicone oil (hereinafter, referred to as "silicone oil"), a catalyst, a lower alcohol, a transition metal, a halide ion, and a compound containing an atom having an unshared electron pair in the molecular structure.

The above fluorine-containing oil is not limited, and examples thereof include a compound (perfluoro(poly)ether compound) represented by the following general formula (1):

Rf⁵-(OC₄F₈)ₐ'-(OC₃F₆)_{b'}-(OC₂F₄)_{c'}-(OCF₂)_{d'}-Rf⁶ ... (1)

wherein Rf⁵ represents an alkyl group having 1 to 16 carbon atoms and optionally substituted with one or more fluorine atoms (preferably, a C₁₋₁₆ perfluoroalkyl group), Rf⁶ represents an alkyl group having 1 to 16 carbon atoms and optionally substituted with one or more fluorine atoms (preferably, a C₁₋₁₆ perfluoroalkyl group), a fluorine atom, or a hydrogen atom, and Rf⁵ and Rf⁶ are more preferably, each independently, a C₁₋₃ perfluoroalkyl group.
a', b', c', and d' represent the respective four numbers of repeating units in perfluoro(poly)ether constituting the main backbone of the polymer and are mutually independently an integer of 0 or more and 300 or less, and the sum of a', b', c', and d' is at least 1, preferably 1 to 300, and more preferably 20 to 300. The occurrence order of the respective repeating units enclosed in parentheses provided with the subscript a', b', c', or d' is not limited in the formula. The above repeating units have at least one branched structure. That is to say, the above repeating units have at least one CF₃ terminal (specifically, -CF₃, -C₂F₅, or the like, and more specifically -CF₃). As for the repeating units having a branched structure, examples of -(OC₄F₈)- may include -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-; examples of -(OC₃F₆)- may include -(OCF(CF₃)CF₂)- and - (OCF₂CF(CF₃))-; and examples of -(OC₂F₄)- may include - (OCF(CF₃))-.

Examples of the perfluoro(poly)ether compound represented by the above general formula (1) include a compound represented by any of the following general formulae (1a) and (1b) (which may be used singly or as a mixture of two or more kinds thereof).

Rf⁵-(OCF(C₃)CF₂)_{b"}-Rf⁶ ... (1a)

Rf⁵-(OC₄F₈)_{a"}-(OC₃F₆)_{b"}-(OCF(CF₃))_{c"}-(OCF₂)_{d"}-Rf⁶ ... (1b)

In these formulae, Rf⁵ and Rf⁶ are as described above; in the formula (1a), b'' is an integer of 1 or more and 100 or less; and in the formula (1b), a'' and b'' are each independently an integer of 1 or more and 30 or less, and c'' and d'' are each independently an integer of 1 or more and 300 or less. The occurrence order of the respective repeating units in parentheses provided with the subscript a", b", c", or d" is not limited in the formula.-(OC₄F₈)- and - (OC₃F₆) - have a branched structure.

The above fluorine-containing oil may have a number average molecular weight of 1,000 to 30,000. In particular, the number average molecular weight of the compound represented by the formula (1a) is preferably 2,000 to 8,000. The compound can have such a number average molecular weight, thereby allowing good friction durability to be obtained. In one embodiment, the number average molecular weight of the compound represented by the formula (1b) is 3,000 to 8,000. In another embodiment, the number average molecular weight of the compound represented by the formula (1b) is 8,000 to 30,000.

The above surface-treating agent can contain, for example, 0 to 500 parts by mass, preferably 0 to 100 parts by mass, more preferably 1 to 50 parts by mass, and still more preferably 1 to 5 parts by mass of the fluorine-containing oil based on 100 parts by mass of the above fluoropolyether group-containing silane compounds.

The above surface-treating agent can contain, for example, 0 to 30 mol%, preferably 0 to 20 mol%, and more preferably 0 to 10 mol% of the fluorine-containing oil based on the total amount of the fluoropolyether group-containing silane compounds and the fluorine-containing oil.

Alternatively, from another viewpoint, the fluorine-containing oil may be a compound represented by the general formula Rf'-F (wherein Rf' is a C₅₋₁₆ perfluoroalkyl group). Alternatively, the fluorine-containing oil may be a chlorotrifluoroethylene oligomer. The compound represented by Rf'-F and the chlorotrifluoroethylene oligomer are preferred in that high affinity with the perfluoro(poly)ether group-containing silane compound in which Rf is a C₁₋₁₆ perfluoroalkyl group is obtained.

The fluorine-containing oil contributes to improving the abrasion durability of the surface-treating layer.

For example, a linear or cyclic silicone oil having 2,000 or less siloxane bonds can be used as the above silicone oil. The linear silicone oil may be a so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying a straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the above surface-treating agent, such a silicone oil may be contained in an amount of, for example, 0 to 50 parts by mass, preferably 0 to 5 parts by mass, based on 100 parts by mass of the above fluoropolyether group-containing silane compounds (in the case of two or more kinds, the total thereof, and the same applies below).

The silicone oil contributes to improving the abrasion durability of the surface-treating layer.

Examples of the above catalyst include an acid (such as acetic acid and trifluoroacetic acid), a base (such as ammonia, triethylamine, and diethylamine), and a transition metal (such as Ti, Ni, and Sn).

The catalyst promotes hydrolysis and dehydration condensation of the above fluorine-containing silane compound and promotes formation of the surface-treating layer.

Examples of the lower alcohol as other components described above include an alcohol compound having 1 to 6 carbon atoms.

Examples of the above transition metal include platinum, ruthenium, and rhodium.

Examples of the above halide ion include a chloride ion.

Examples of the above compound containing an atom having an unshared electron pair in the molecular structure include diethylamine, triethylamine, aniline, pyridine, hexamethylphosphoramide, N,N-diethylacetamide, N,N-diethylformamide, N,N-dimethylacetamide, N-methylformamide, N,N-dimethylformamide, N-methylpyrrolidone, tetramethylurea, dimethyl sulfoxide (DMSO), tetramethylene sulfoxide, methylphenyl sulfoxide, and diphenyl sulfoxide. Among these compounds, dimethyl sulfoxide or tetramethylene sulfoxide is preferably used.

Examples of the other components include, in addition to those described above, tetraethoxysilane, methyltrimethoxysilane, 3-aminopropyltrimethoxysilane, 3-glycidoxypropyltrimethoxysilane, and methyltriacetoxysilane.

In one embodiment, the above surface-treating agent does not comprise any fluorine-containing oil, silicone oil, catalyst, lower alcohol, transition metal, halide ion, and compound containing an atom having an unshared electron pair in the molecular structure, as the other components described above.

The composition (for example, surface-treating agent) of the present embodiment can contribute to formation of a cured layer having good friction durability. Furthermore, the friction durability of a cured layer formed by using the composition of the present embodiment becomes good, and the lubricity on the surface of the cured layer becomes good. In addition, it is thought that, in the compositions of the present embodiment, the secondary structure of the R^{F} moiety is likely to take a helical structure, and the polymer density per unit area and the crosslink density of the silane coupling agent are likely to be larger, resulting in a higher strength of the cured layer.

In one embodiment, the surface-treating agent of the present disclosure comprises the fluoropolyether group-containing silane compounds of the present disclosure and a fluorine-containing oil.

In one embodiment, the surface-treating agent of the present disclosure comprises the fluoropolyether group-containing silane compounds of the present disclosure and does not comprise any fluorine-containing oil as the other components described above (for example, the content of the fluorine-containing oil is 1 part by mass or less, more specifically 0 parts by mass, based on 100 parts by mass of the surface-treating agent).

To the surface-treating agent of the present disclosure, if necessary, a hydrolysis condensation catalyst, such as an organotin compound (dibutyltin dimethoxide, dibutyltin dilaurate, and the like), an organotitanium compound (tetra-n-butyl titanate and the like), an organic acid (acetic acid, methanesulfonic acid, a fluorine-modified carboxylic acid, and the like), and an inorganic acid (hydrochloric acid, sulfuric acid, and the like) may be further added. Among these, in particular, acetic acid, tetra-n-butyl titanate, dibutyltin dilaurate, a fluorine-modified carboxylic acid, and the like are desirable.

The amount of the above hydrolysis condensation catalyst added is a catalytic amount, usually 0.01 to 5 parts by mass, particularly 0.1 to 1 part by mass, based on 100 parts by mass of the fluoropolyether group-containing silane compounds and/or their partial (hydrolysis) condensates.

The surface-treating agent of the present disclosure can be formed into pellets by impregnating a porous material such as a porous ceramic material or a metal fiber such as a fiber obtained by, for example, solidifying steel wool in a cotton-like form therewith. Such pellets can be used in, for example, vacuum deposition.

The surface-treating agent of the present disclosure is used as an antifouling coating agent or a waterproof coating agent.

The above coating agent (hereinafter, also referred to as the "coating agent of the present disclosure") comprises the composition of the present disclosure and a liquid medium. The coating agent of the present disclosure only needs to be in liquid form, and may be a solution or a dispersion.

The coating agent of the present disclosure only needs to comprise the composition of the present disclosure, and may contain impurities such as by-products produced in the production steps for the compound (A), the compound (B), and the like.

The concentration of the composition of the present disclosure is preferably 0.001 to 50% by mass, more preferably 0.05 to 30% by mass, still more preferably 0.05 to 10% by mass, and particularly preferably 0.1 to 1% by mass in the coating agent of the present disclosure.

As the liquid medium, an organic solvent is preferred. The organic solvent may be a fluorinated organic solvent, may be a non-fluorinated organic solvent, or may contain both solvents.

Examples of the fluorinated organic solvent include a fluorinated alkane, a fluorinated aromatic compound, a fluoroalkyl ether, a fluorinated alkylamine, and a fluoroalcohol.

As the fluorinated alkane, a compound having 4 to 8 carbon atoms is preferred. Examples of commercially available products thereof include C₆F₁₃H (manufactured by AGC Inc., Asahiklin(R) AC-2000), C₆F₁₃C₂H₅ (manufactured by AGC Inc., Asahiklin(R) AC-6000), and C₂F₅CHFCHFCF₃ (manufactured by The Chemours Company, Vertrel(R) XF).

Examples of the fluorinated aromatic compound include hexafluorobenzene, trifluoromethylbenzene, perfluorotoluene, and bis(trifluoromethyl)benzene.

As the fluoroalkyl ether, a compound having 4 to 12 carbon atoms is preferred. Examples of commercially available products thereof include CF₃CH₂OCF₂CF₂H (manufactured by AGC Inc., Asahiklin(R) AE-3000), C₄F₉OCH₃ (manufactured by 3M, Novec(R) 7100), C₄F₉OC₂H₅ (manufactured by 3M, Novec(R) 7200), and C₂F₅CF(OCH₃)C₃F₇ (manufactured by 3M, Novec(R) 7300).

Examples of the fluorinated alkylamine include perfluorotripropylamine and perfluorotributylamine.

Examples of the fluoroalcohol include 2,2,3,3-tetrafluoropropanol, 2,2,2-trifluoroethanol, and hexafluoroisopropanol.

The non-fluorinated organic solvent is preferably a compound consisting only of hydrogen and carbon atoms or a compound consisting only of hydrogen, carbon, and oxygen atoms, and examples thereof include a hydrocarbon-based organic solvent, an alcohol-based organic solvent, a ketone-based organic solvent, an ether-based organic solvent, and an ester-based organic solvent.

The coating agent of the present disclosure preferably comprises 50 to 99.999% by mass of the liquid medium, more preferably comprises 70 to 99.5% by mass thereof, still more preferably comprises 90 to 99.5% by mass thereof, and particularly preferably comprises 99 to 99.9% by mass thereof.

The coating agent of the present disclosure may comprise, in addition to the composition and medium of the present disclosure, other components to the extent that the effects of the present invention are not impaired.

Examples of the other components include known additives such as acid catalysts and basic catalysts that promote hydrolysis and condensation reactions of hydrolyzable silyl groups.

The content of the other components in the coating agent of the present disclosure is preferably 10% by mass or less, and particularly preferably 1% by mass or less.

The solid concentration of the coating agent of the present disclosure is preferably 0.001 to 50% by mass, more preferably 0.05 to 30% by mass, still more preferably 0.05 to 10% by mass, and particularly preferably 0.01 to 1% by mass.

The solid concentration of the coating agent is a value calculated from the mass of the coating agent before heating and the mass after heating in a convection dryer at 120°C for 4 hours.

The concentration of the composition of the present disclosure can be calculated from the solid concentration and the charging amounts of the composition of the present disclosure, the solvent, and other components.

The surface-treating agent of the present disclosure can be used for, in particular, coats for display input devices such as touch panels; surface protective coats for members made of transparent glass or transparent plastics, antifouling coats for kitchens; water-repellent and moisture-proof coats and antifouling coats for electronic equipment, heat exchangers, batteries, and the like; antifouling coats for toiletries; coats for members requiring liquid-repellency while conduction; water-repellent, waterproof, and water-slipping coats for heat exchangers; and surface low-friction coats for vibrating sieves, cylinder interiors, and the like, for example. More specific examples of use include front surface protective plates of displays, antireflection plates, polarizing plates, anti-glare plates, or those obtained by performing an antireflection film treatment on their surfaces, coats for various equipment having display input devices that are operated on the screen with a human finger or palm, such as touch panel sheets and touch panel displays for equipment such as cell phones (for example, smartphones), portable information terminals, game consoles, and remote controls (for example, coats for glass or films used for display sections and the like, and coats for glass, films, or metals used for exterior parts other than display sections), coats for decorative building materials around water in toilets, baths, washrooms, kitchens, and other areas, waterproof coatings for circuit boards, water-repellent, waterproof, and water-slipping coats for heat exchangers, water-repellent coats for solar cells, waterproof and water-repellent coats for printed circuit boards, waterproof and water-repellent coats for electronic equipment housings and electronic components, insulating property-improving coats for power transmission lines, waterproof and water-repellent coats for various filters, waterproof coats for electric wave absorptive materials and sound absorptive materials, antifouling coats for baths, kitchen equipment and toiletries, surface low-friction coats for vibrating sieves, cylinder interiors, and the like, and surface protective coats for machine components, vacuum equipment components, bearing components, components for transportation equipment such as automobiles, tools, and the like, for example.

Hereinafter, an article of the present disclosure will be described.

The article of the present disclosure comprises a substrate and a layer (surface-treating layer) on the substrate surface, the layer being formed of the surface-treating agent according to the present disclosure.

The substrate usable in the present disclosure may be composed of any suitable material such as glass, resin (which may be natural or synthetic resin such as a commonly used plastic material), metal, ceramics, semiconductors (such as silicon and germanium), fiber (such as woven fabric and nonwoven fabric), fur, leather, wood, pottery, stone, building materials, and sanitary articles.

For example, when the article to be produced is an optical member, the material constituting the surface of the substrate may be a material for an optical member, such as glass or a transparent plastic. When the article to be produced is an optical member, some layer (or film) such as a hard coat layer or an antireflection layer may be formed on the surface (the outermost layer) of the substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, Ta₃O₅, Nb₂O₅, HfO₂, Si₃N₄, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

The shape of the substrate is not limited, and may be, for example, in the form of a plate, a film, or the like. The surface region of the substrate on which a surface-treating layer is to be formed may be at least a part of the substrate surface, and may be suitably determined according to the application, specific configuration, and the like of an article to be produced.

In one embodiment, the substrate, or at least the surface portion thereof, may be composed of a material originally having a hydroxyl group. Examples of the material include glass, as well as metal (in particular, base metal) where a natural oxidized film or a thermal oxidized film is formed on the surface, ceramics, and semiconductors. Alternatively, when the substrate has an insufficient amount of hydroxyl groups or when the substrate originally has no hydroxyl group as in resin and the like, a pre-treatment may be performed on the substrate to thereby introduce or increase hydroxyl groups on the surface of the substrate. Examples of such a pre-treatment include a plasma treatment (for example, corona discharge) and ion beam irradiation. The plasma treatment can be suitably utilized to not only introduce or increase hydroxyl groups on the substrate surface, but also clean the substrate surface (remove foreign matter and the like). Another example of such a pre-treatment is a method wherein a monolayer of a surface adsorbent having a carbon-carbon unsaturated bonding group is formed on the surface of the substrate by a LB method (a Langmuir-Blodgett method), a chemical adsorption method, or the like beforehand, and thereafter cleaving the unsaturated bond under an atmosphere containing oxygen, nitrogen, or the like.

In another embodiment, the substrate, or at least the surface portion thereof, may be composed of a material comprising another reactive group such as a silicone compound having one or more Si-H group or alkoxysilane.

In a preferred embodiment, the above substrate is glass. As the glass sapphire glass, soda-lime glass, alkali aluminosilicate glass, borosilicate glass, alkali-free glass, crystal glass, and quartz glass are preferred, and chemically tempered soda-lime glass, chemically tempered alkali aluminosilicate glass, and chemically bonded borosilicate glass are particularly preferred.

The article of the present disclosure can be produced by forming a layer of the surface-treating agent of the present disclosure on the surface of the substrate and post-treating this layer as necessary to thereby form a layer from the surface-treating agent of the present disclosure.

The layer of the surface-treating agent of the present disclosure can be formed by applying the above surface-treating agent on the surface of the substrate such that the surface-treating agent coats the surface. The coating method is not limited. For example, a wet coating method and a dry coating method can be used, and preferably a wet coating method is used.

Examples of the wet coating method include dip coating, spin coating, flow coating, spray coating, roll coating, gravure coating, and similar methods.

Examples of the dry coating method include deposition (usually, vacuum deposition), sputtering, CVD, and similar methods. Specific examples of the deposition method (usually, a vacuum deposition method) include resistive heating, highfrequency heating using electron beam, microwave, or the like, ion beam, and similar methods. Specific examples of the CVD method include plasma-CVD, optical CVD, thermal CVD, and similar methods.

Furthermore, coating by an atmospheric pressure plasma method can be performed.

A layer of the surface-treating agent is preferably formed such that the surface-treating agent of the present disclosure coexists in the layer with a catalyst for hydrolysis and dehydration condensation. Conveniently, in the case of a wet coating method, the surface-treating agent of the present disclosure is diluted with a solvent, and then, immediately before application to the substrate surface, a catalyst may be added to the diluted solution of the surface-treating agent of the present disclosure. In the case of a dry coating method, the surface-treating agent of the present disclosure to which a catalyst has been added is directly used to a deposition (usually vacuum deposition) treatment, or a pellet-like material may be used to a deposition (usually vacuum deposition) treatment, wherein the pellets are obtained by impregnating a porous body of metal such as iron or copper with the surface-treating agent of the present disclosure to which the catalyst has been added.

Any suitable acid or base can be used as the catalyst. For example, acetic acid, formic acid, and trifluoroacetic acid can be used as the acid catalyst. For example, ammonia and organic amines can be used as the base catalyst.

The surface-treating layer formed using the surface-treating agent of the present disclosure is substantially free from the fluoropolyether group-containing compounds contained in the surface-treating agent of the present disclosure.

Accordingly, the present disclosure provides an article comprising a substrate and a surface-treating layer formed on the substrate, wherein the surface-treating layer is formed from the fluoropolyether group-containing silane compounds and substantially free from the fluoropolyether group-containing compounds.

The surface-treating layer contained in the article of the present disclosure has high abrasion durability. In addition, the above surface-treating layer may have not only high abrasion durability, but also have, depending on the compositional features of the surface-treating agent used, water-repellency, oil-repellency, antifouling property (for example, preventing fouling such as fingerprints from adhering), waterproof property (preventing water from penetrating into electronic components and the like), surface lubricity (or lubricity, such as wiping property for fouling including fingerprints and the like and excellent tactile sensations to the fingers), chemical resistance, and the like, and may be suitably utilized as a functional thin film.

Therefore, the present disclosure further relates to an optical material having the above surface-treating layer in the outermost layer.

The optical material preferably includes a wide variety of optical materials, in addition to optical materials relating to displays and the like as exemplified below: for example, displays such as cathode ray tubes (CRTs; for example, PC monitors), liquid crystal displays, plasma displays, organic EL displays, inorganic thin-film EL dot matrix displays, rear projection displays, vacuum fluorescent displays (VFDs), field emission displays (FEDs); protective plates for such displays; and those obtained by performing an antireflection film treatment on their surfaces.

The article of the present disclosure may be, but is not limited to, an optical member. Examples of the optical member include lenses of glasses or the like; front surface protective plates, antireflection plates, polarizing plates, and anti-glare plates for displays such as PDPs and LCDs; touch panel sheets for equipment such as cell phones and portable information terminals; disc surfaces of optical discs such as Blu-ray(R) discs, DVD discs, CD-Rs, and MOs; optical fibers; and display surfaces of watches and clocks.

The article of the present disclosure may be medical equipment or a medical material.

The thickness of the above layer is not limited. The thickness of the above layer in the case of an optical member is in the range of 1 to 50 nm, 1 to 30 nm, and preferably 1 to 15 nm, from the viewpoint of optical performance, abrasion durability, and antifouling property.

The article of the present disclosure and the method for producing the same have been described in detail above. The article of the present disclosure, the method for producing the article, and the like are not limited to those exemplified above.

### Examples

Hereinafter, the present disclosure will now be described with reference to, but is not limited to, Examples. In this Examples, all the chemical formulae shown below represent average compositional features. Also, the occurrence order of the repeating units constituting perfluoropolyether is not limited.

As the fluoropolyether group-containing silane compound (A), the following compounds (a1) and (a2) were prepared.
· Compounds (a1) and (a2)

   CF₃CF₂CF₂O[CF(CF₃)CF₂O]ₙCF(CF₃)CONHCH₂C[CH₂CH₂CH₂Si(OCH₃)₃ ]₃

   (compound (a1): n = 12; compound (a2): n = 24)

As the fluoropolyether group-containing silane compound (B), the following compounds (b1) to (b4) were prepared.
• Compound (b1)

   [(CH₃O)₃SiCH₂CH₂CH₂]₃CCH₂NHCOCF₂O(CF₂CF₂O)ₘ(CF₂O)ₙCF₂CONHC H₂C[CH₂CH₂CH₂Si(OCH₃)₃]₃

   (m = 18, n = 29)
· Compound (b2)

   [(CH₃O)₃SiCH₂CH₂CH₂]₂NCOCF₂O(CF₂CF₂O)ₘ(CF₂O)ₙCF₂CON[CH₂CH₂C H₂Si(OCH₃)₃]₂

   (m = 18, n = 29)
· Compound (b3)

   [(CH₃O)₃SiCH₂CH₂CH₂]₂NCOCH₂OCH₂CF₂O(CF₂CF₂O)ₘ(CF₂O)ₙCF₂CH₂O CH₂CON[CH₂CH₂CH₂Si(OCH₃)₃]₂

   (m = 18, n = 29)
• Compound (b4)

   [(CH₃O)₃SiCH₂CH₂CH₂]₃CCH₂NHCOCH₂OCH₂CF₂O(CF₂CF₂O)ₘ(CF₂O)ₙCF ₂CH₂OCH₂CONHCH₂C[CH₂CH₂CH₂Si(OCH₃)₃]₃

   (m = 18, n = 29)

Furthermore, as the fluoropolyether group-containing silane compound (B), the following compound (b5) was synthesized.

### (Synthetic Example 1)

2.0 g of HOOCCF₂-(CF₂CF₂O)ₘ-(CF₂O)ₙ-CF₂COOH (m ≈ 20, n ≈ 33), 15 g of toluene, 15 g of m-hexafluoroxylene, and 0.23 mL of N,N-dimethylformamide were each added, 0.65 mL of thionyl chloride was then charged, and the mixture was heated to 60°C and stirred for 5 hours. Thereafter, volatiles were distilled off under reduced pressure, 4.0 g of lithium iodide was added, and the mixture was heated to 220°C and stirred for 12 hours. Thereafter, purification was performed, and thus 10.5 g of the following polyether group-containing compound (b5') was obtained.

### Polyether group-containing compound (b5')

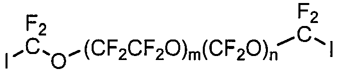

(m ≈ 20, n ≈ 33)

### (Synthetic Example 2)

5.0 g of the polyether group-containing compound (b5') ICF₂-(CF₂CF₂O)ₘ-(CF₂O)ₙ-CF₂I (m ≈ 20, n ≈ 33) obtained in Synthetic Example 1, 5.0 g of m-hexafluoroxylene, 1.3 mL of trichlorovinylsilane, and 0.40 mL of tert-butyl peroxide were each added, and the mixture was then heated to 130°C and stirred for 10 hours. Thereafter, volatiles were distilled off under reduced pressure, 0.8 g of zinc and 5.0 g of tetradecafluorohexane were added, the mixture was cooled in an ice bath, 6.3 mL of methanol was added, and the mixture was then stirred at 45°C for 8 hours. Thereafter, purification was performed, and thus 3.6 g of the following polyether group-containing compound (b5) was obtained.

### Polyether group-containing compound (b5)

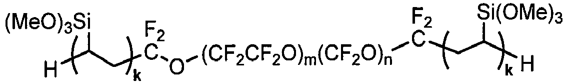

(m ≈ 20, n ≈ 33, k ≈ 3)

As the control compound, the following compound (c1) was prepared.
• Compound (c1)

   CF₃O(CF₂CF₂O)ₘ(CF₂O)ₙCF₂CONHCH₂C[CH₂CH₂CH₂Si(OCH₃)₃]₃

   (m = 18, n = 29)

### [Formation of surface-treating layer]

The above compounds were combined and dissolved in Novec 7200 (manufactured by 3M) to a total concentration of 20 wt%, thereby preparing surface-treating agents. The surface-treating agents prepared were vacuum-deposited on a chemically tempered glass ("Gorilla" glass, manufactured by Corning Incorporated, thickness 0.7 mm). The conditions of the vacuum deposition method were as follows: resistive heating deposition machine (manufactured by Shincron Co., Ltd.), chamber size 1,900 mmϕ, degree of vacuum 5.0E - 05, current value 240 A, voltage 10 V, and substrate temperature 40°C. Next, the chemically tempered glass with a deposited film was left to stand in an atmosphere at a temperature of 150°C for 30 minutes, and then allowed to cool to room temperature to form a surface-treating layer on the glass substrate. The combinations of compounds and their compositional features are shown in the tables below. Note that the combinations of compounds (a1) and (b2), compounds (a2) and (b2), compounds (a1) and (b1), compounds (a1) and (b3), compounds (a1) and (b4), and compounds (a1) and (b5) are Examples, while the combination of compounds (c1) and (b2) is Comparative Example.

### [Evaluation]

### (Measurement of static contact angle)

The static contact angle was determined by dripping 2 µL of water from a microsyringe onto a horizontally placed substrate and taking a still image with a video microscope 1 second after the dripping. The measurement was carried out by using a fully automatic contact angle meter DropMaster 700 (manufactured by Kyowa Interface Science Co., Ltd.).

### (Initial evaluation)

First, as an initial evaluation, after the surface-treating layer was formed, the static water contact angle of the surface with which nothing was brought into contact yet was measured.

### (Pencil-eraser durability test)

For the surface-treating layer formed as described above, the static contact angle of water was measured after 1,000 round trips under the following conditions using a rubbing tester (manufactured by Sinto Scientific Co., Ltd.).
Pencil-eraser: Raber Eraser (manufactured by Minoan)
Contact area: 6 mmϕ
Moving distance (one way): 40 mm
Moving speed: 3,600 mm/min
Load: 1 kg/6 mmϕ
Temperature: 25°C
Humidity: 40% RH

### (UV durability test)

For the surface-treating layer formed as described above, the static contact angle of water was measured after 48 hours of UV irradiation. The UV irradiation was carried out by using a UVB-313 lamp (manufactured by Q-Lab, irradiance 0.63 W/m² at 310 nm), setting the black panel temperature of the substrate to 63 degrees, and setting the distance between the lamp and the surface-treating layer to 5 cm.

**[Table 1]**

| Combination of compounds | Initial contact angle | Pencil-eraser durability test (1,000 times) | Difference between initial and pencil-eraser test | UV durability test (48 hours) | Difference between initial and UV test |
|---|---|---|---|---|---|
| (a1)/(b2) | | | | | |
| 0/100 | 105 | 102 | 3 | 95 | 10 |
| 40/60 | 106 | 100 | 6 | 100 | 6 |
| 50/50 | 107 | 100 | 7 | 103 | 4 |
| 60/40 | 107 | 101 | 6 | 105 | 2 |
| 70/30 | 108 | 101 | 7 | 107 | 1 |
| 80/20 | 108 | 101 | 7 | 107 | 1 |
| 90/10 | 109 | 102 | 7 | 108 | 1 |
| 100/0 | 114 | 95 | 19 | 111 | 3 |
| | | | | | |

| (a2)/(b2) | | | | | |
|---|---|---|---|---|---|
| 0/100 | 105 | 102 | 3 | 95 | 10 |
| 40/60 | 106 | 101 | 5 | 100 | 6 |
| 50/50 | 107 | 101 | 6 | 101 | 6 |
| 60/40 | 107 | 101 | 6 | 104 | 3 |
| 70/30 | 108 | 102 | 6 | 105 | 3 |
| 80/20 | 109 | 102 | 7 | 106 | 3 |
| 90/10 | 109 | 103 | 6 | 106 | 3 |
| 100/0 | 115 | 102 | 13 | 112 | 3 |
| | | | | | |

| (a1)/(b1) | | | | | |
|---|---|---|---|---|---|
| 0/100 | 108 | 105 | 3 | 98 | 10 |
| 40/60 | 108 | 103 | 5 | 100 | 8 |
| 50/50 | 109 | 103 | 6 | 105 | 4 |
| 60/40 | 110 | 104 | 6 | 107 | 3 |
| 70/30 | 110 | 104 | 6 | 107 | 3 |
| 80/20 | 110 | 104 | 6 | 108 | 2 |
| 90/10 | 111 | 104 | 7 | 108 | 3 |
| 100/0 | 114 | 95 | 19 | 111 | 3 |

**[Table 2]**

| Combination of compounds | Initial contact angle | Pencil-eraser durability test (1,000 times) | Difference between initial and pencil-eraser test | UV durability test (48 hours) | Difference between initial and UV test |
|---|---|---|---|---|---|
| (a1)/(b3) | | | | | |
| 0/100 | 105 | 100 | 5 | 93 | 12 |
| 40/60 | 106 | 100 | 6 | 97 | 9 |
| 50/50 | 106 | 100 | 6 | 100 | 6 |
| 60/40 | 106 | 100 | 6 | 104 | 2 |
| 70/30 | 107 | 100 | 7 | 105 | 2 |
| 80/20 | 108 | 101 | 7 | 107 | 1 |
| 90/10 | 109 | 101 | 8 | 108 | 1 |
| 100/0 | 114 | 95 | 19 | 111 | 3 |
| | | | | | |

| (a1)/(b4) | | | | | |
|---|---|---|---|---|---|
| 0/100 | 108 | 104 | 4 | 94 | 14 |
| 40/60 | 108 | 103 | 5 | 98 | 10 |
| 50/50 | 109 | 103 | 6 | 101 | 8 |
| 60/40 | 110 | 103 | 7 | 107 | 3 |
| 70/30 | 110 | 103 | 7 | 107 | 3 |
| 80/20 | 111 | 103 | 8 | 108 | 3 |
| 90/10 | 111 | 103 | 8 | 109 | 2 |
| 100/0 | 114 | 95 | 19 | 111 | 3 |
| | | | | | |

| (a1)/(b5) | | | | | |
|---|---|---|---|---|---|
| 0/100 | 107 | 102 | 5 | 90 | 17 |
| 40/60 | 108 | 101 | 7 | 103 | 5 |
| 50/50 | 108 | 100 | 8 | 105 | 3 |
| 60/40 | 109 | 100 | 9 | 107 | 2 |
| 70/30 | 110 | 101 | 9 | 107 | 3 |
| 80/20 | 111 | 100 | 11 | 109 | 2 |
| 90/10 | 111 | 101 | 10 | 109 | 2 |
| 100/0 | 114 | 95 | 19 | 111 | 3 |
| | | | | | |

| (c1)/(b2) | | | | | |
|---|---|---|---|---|---|
| 0/100 | 105 | 102 | 3 | 95 | 10 |
| 40/60 | 106 | 102 | 4 | 96 | 10 |
| 50/50 | 107 | 103 | 4 | 95 | 12 |
| 60/40 | 108 | 105 | 3 | 96 | 12 |
| 70/30 | 110 | 107 | 3 | 99 | 11 |
| 80/20 | 113 | 110 | 3 | 98 | 15 |
| 90/10 | 113 | 112 | 1 | 98 | 15 |
| 100/0 | 114 | 113 | 1 | 98 | 16 |

From the above results, it was confirmed that the combination of the fluoropolyether group-containing silane compound (A) and the fluoropolyether group-containing silane compound (B) can form a surface-treating layer with high abrasion durability and UV durability.

### Industrial Applicability

The surface-treating agent of the present disclosure can be suitably utilized in a variety of diverse applications.

## Claims

1. A surface-treating agent comprising:
a fluoropolyether group-containing silane compound (A) represented by the following formula (1):
**R^{F1}_{α}-X^{A}-R^{S1}_{β}** **(1)**
wherein
R^{F1} is each independently at each occurrence Rf¹-R^{FA}-O_{q}-;
Rf¹ is each independently at each occurrence a C₁₋₁₆ alkyl group optionally substituted with one or more fluorine atoms;
R^{FA} is each independently at each occurrence a fluoropolyether group having a branched structure;
q is each independently at each occurrence 0 or 1;
R^{S1} is each independently at each occurrence a Si atom-containing group having a hydroxyl group or a hydrolyzable group;
X^{A} is each independently a single bond or a di- to decavalent organic group;
α is an integer of 1 to 9; and
β is an integer of 1 to 9;
and
a fluoropolyether group-containing silane compound (B) represented by the following formula (2):
**R^{S2}_{γ}-X^{B}-R^{F2}-X^{B}-R^{S2}_{γ}** **(2)**
wherein
R^{F2} is -Rf²ₚ-R^{FB}-O_{q}-;
Rf² is a C₁₋₆ alkylene group optionally substituted with one or more fluorine atoms;
R^{FB} is each independently at each occurrence a linear fluoropolyether group;
p is 0 or 1;
q is each independently at each occurrence 0 or 1;
R^{S2} is each independently at each occurrence a Si atom-containing group having a hydroxyl group or a hydrolyzable group;
X^{B} is each independently a single bond or a di- to decavalent organic group; and
γ is each independently an integer of 1 to 9.

2. The surface-treating agent according to claim 1, wherein
R^{FA} is each independently at each occurrence a group represented by the following formula and having at least one branched structure:
-(OC₆F₁₂)ₐ-(OC₅F₁₀)_{b}-(OC₄F₈)_{c-}(OC₃X^{F}₆)_{d}-(OC₂F₄)ₑ-(OCF₂)_{f}-
wherein
a, b, c, d, e, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and
X^{F} is each independently at each occurrence a hydrogen atom, a fluorine atom, or a chlorine atom;
and
R^{FB} is each independently at each occurrence a linear group represented by the following formula:
-(OC₅F₁₂)ₐ-(OC₅F₁₀)_{b}-(OC₄F₈)_{c}-(OC₃X^{F}₆)_{d}-(OC₂F₄)ₑ-(OCF₂)_{f}-
wherein
a, b, c, d, e, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and
X^{F} is each independently at each occurrence a hydrogen atom, a fluorine atom, or a chlorine atom.

3. The surface-treating agent according to claim 1 or 2, wherein
R^{FA} is each independently at each occurrence a group represented by the following formula (f1), (f2), (f3), (f4), (f5), or (f6) and having at least one branched structure:
-(OC₃F₆)_{d}-(OC₂F₄)ₑ- (f1)
wherein d is an integer of 1 to 200, and e is 0 or 1;
- (OC₄F₈)_{c}-(OC₃F₆)_{d}-(OC₂F₄)ₑ-(OCF₂)_{f}- (f2)
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with the subscript c, d, e, or f is not limited in the formula;
-(R⁶-R⁷)_{g}- (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups selected from these groups; and
g is an integer of 2 to 100;
-(R⁶-R⁷)_{g}-R^{r}-(R^{7'}-R^{6'})_{g'}- (f4)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
R^{6'} is OCF₂ or OC₂F₄;
R^{7'} is a group selected from OC₂F₄, OC₃F₆, OC₄F₈, OC₅F₁₀, and OC₆F₁₂, or is a combination of two or three groups independently selected from these groups;
g is an integer of 2 to 100;
g' is an integer of 2 to 100; and
R^{r} is any of the following: 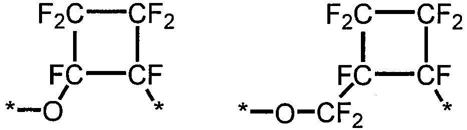 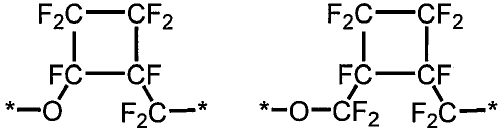 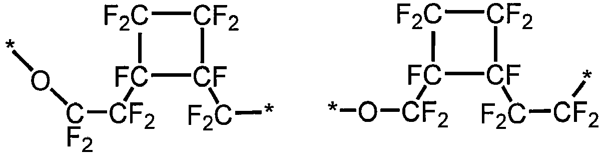 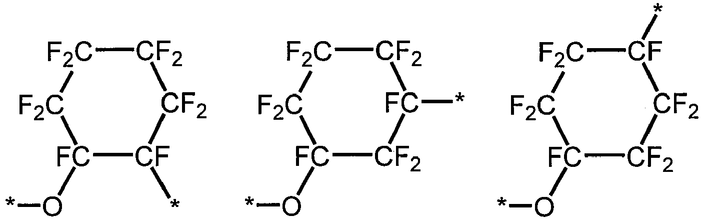 wherein * represents a binding position;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.

4. The surface-treating agent according to any one of claims 1 to 3, wherein
R^{FB} is each independently at each occurrence a linear group represented by the following formula (f1), (f2), (f3), (f4), (f5), or (f6) :
-(OC₃F₆)_{d}-(OC₂F₄)ₑ- (f1)
wherein d is an integer of 1 to 200, and e is 0 or 1;
- (OC₄F₈)_{c}-(OC₃F₆)_{d}-(OC₂F₄)ₑ-(OCF₂)_{f}- (f2)
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with the subscript c, d, e, or f is not limited in the formula;
-(R⁶-R⁷)_{g}- (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups selected from these groups; and
g is an integer of 2 to 100;
-(R⁶-R⁷)_{g}-R^{r}-(R^{7'}-R^{6'})_{g'}- (f4)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups;
R^{6'} is OCF₂ or OC₂F₄;
R^{7'} is a group selected from OC₂F₄, OC₃F₆, OC₄F₈, OC₅F₁₀, and OC₆F₁₂, or is a combination of two or three groups independently selected from these groups;
g is an integer of 2 to 100;
g' is an integer of 2 to 100; and
R^{r} is any of the following: 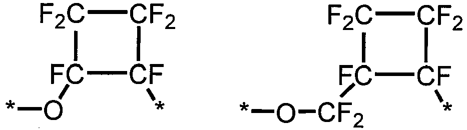 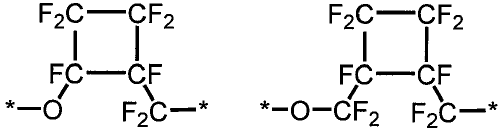 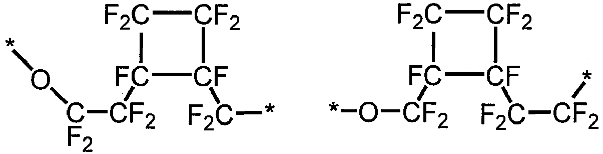 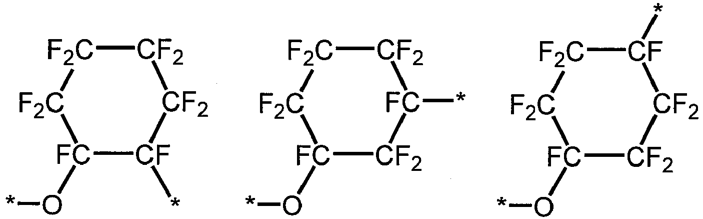 wherein * represents a binding position;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.

5. The surface-treating agent according to any one of claims 1 to 4, wherein
R^{FA} is each independently at each occurrence a group represented by the following formula (fla):
- (OCF(CF₃)CF₂)_{d}-(OCF(CF₃))ₑ- (fla)
wherein d is an integer of 1 to 200, and e is 0 or 1.

6. The surface-treating agent according to any one of claims 1 to 5, wherein
R^{FB} is each independently at each occurrence a group represented by the following formula (f2b):
- (OCF₂CF₂CF₂CF₂)_{c}-(OCF₂CF₂CF₂)_{d}-(OCF₂CF₂)ₑ-(OCF₂)_{f}- (f2b)
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with the subscript c, d, e, or f is not limited in the formula.

7. The surface-treating agent according to any one of claims 1 to 6, wherein
R^{S1} and R^{S2} are each independently at each occurrence a group represented by the following formula (S1), (S2), (S3), (S4), or (S5): 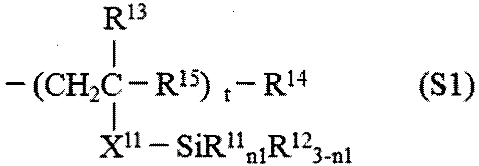
**-SiR¹¹ₙ₁R¹²₃₋ₙ₁** **(S2)**
**- SiR^{a1}ₖ₁R^{b1}ₗ₁R^{c1}ₘ₁** **(S3)**
**- CR^{d1}ₖ₂R^{e1}ₗ₂R^{f1}ₘ₂** **(S4)**
**- NR^{g1}R^{h1}** **(S5)**
wherein
R¹¹ is each independently at each occurrence a hydroxyl group or a hydrolyzable group;
R¹² is each independently at each occurrence a hydrogen atom or a monovalent organic group;
n1 is each independently an integer of 0 to 3 for each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
R¹⁴ is each independently at each occurrence a hydrogen atom, a halogen atom, or -X¹¹-SiR¹¹ₙ₁R¹²₃₋ₙ₁;
R¹⁵ is each independently at each occurrence a single bond, an oxygen atom, an alkylene group having 1 to 6 carbon atoms, or an alkyleneoxy group having 1 to 6 carbon atoms;
t is each independently at each occurrence an integer of 2 or more;
R^{a1} is each independently at each occurrence -Z¹-SiR²¹ₚ₁R²²_{q1}R²³ᵣ₁;
Z¹ is each independently at each occurrence an oxygen atom or a divalent organic group;
R²¹ is each independently at each occurrence -Z^{1'}-SiR^{21'}_{p1'}R^{22'}_{q1'}R^{23'}_{r1'} ;
R²² is each independently at each occurrence a hydroxyl group or a hydrolyzable group;
R²³ is each independently at each occurrence a hydrogen atom or a monovalent organic group;
p1 is each independently at each occurrence an integer of 0 to 3;
q1 is each independently at each occurrence an integer of 0 to 3;
r1 is each independently at each occurrence an integer of 0 to 3;
the sum of p1, q1, and r1 is 3 in the SiR²¹ₚ₁R²²_{q1}R²³ᵣ₁ unit;
Z^{1'} is each independently at each occurrence an oxygen atom or a divalent organic group;
R^{21'} is each independently at each occurrence -Z^{1"}-SiR^{22"}_{q1"}R^{23"}_{r1"} ;
R^{22'} is each independently at each occurrence a hydroxyl group or a hydrolyzable group;
R^{23'} is each independently at each occurrence a hydrogen atom or a monovalent organic group;
p1' is each independently at each occurrence an integer of 0 to 3;
q1' is each independently at each occurrence an integer of 0 to 3;
r1' is each independently at each occurrence an integer of 0 to 3;
the sum of p1', q1', and r1' is 3 in the SiR^{21'}_{p1'}R^{22'}_{q1'}R^{23'}_{r1'} unit;
Z^{1"} is each independently at each occurrence an oxygen atom or a divalent organic group;
R^{22"} is each independently at each occurrence a hydroxyl group or a hydrolyzable group;
R^{23"} is each independently at each occurrence a hydrogen atom or a monovalent organic group;
ql" is each independently at each occurrence an integer of 0 to 3;
rl" is each independently at each occurrence an integer of 0 to 3;
the sum of ql" and rl" is 3 in the SiR^{22"}_{q1"}R^{23"}_{r1"} unit;
R^{b1} is each independently at each occurrence a hydroxyl group or a hydrolyzable group;
R^{c1} is each independently at each occurrence a hydrogen atom or a monovalent organic group;
k1 is each independently at each occurrence an integer of 0 to 3;
l1 is each independently at each occurrence an integer of 0 to 3;
m1 is each independently at each occurrence an integer of 0 to 3;
the sum of k1, l1, and m1 is 3 in the SiR^{a1}ₖ₁R^{b1}ₗ₁R^{c1}ₘ₁ unit;
R^{d1} is each independently at each occurrence -Z²-CR³¹ₚ₂R³²_{q2}R³³ᵣ₂ ;
Z² is each independently at each occurrence a single bond, an oxygen atom, or a divalent organic group;
R³¹ is each independently at each occurrence -Z^{2'}-CR^{32'}_{q2'}R^{33'}_{r2'};
R³² is each independently at each occurrence -Z³-SiR³⁴ₙ₂R³⁵₃₋ₙ₂ ;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
the sum of p2, q2, and r2 is 3 in the SiR³¹ₚ₂R³²_{q2}R³³ᵣ₂ unit;
Z^{2'} is each independently at each occurrence a single bond, an oxygen atom, or a divalent organic group;
R^{32'} is each independently at each occurrence -Z³-SiR³⁴ₙ₂R³⁵₃₋ₙ₂ ;
R^{33'} is each independently at each occurrence a hydrogen atom, a hydroxyl group, or a monovalent organic group;
q2' is each independently at each occurrence an integer of 0 to 3;
r2' is each independently at each occurrence an integer of 0 to 3;
the sum of q2' and r2' is 3 in the SiR^{32'}_{q2'}R^{33'}_{r2'} unit;
Z³ is each independently at each occurrence a single bond, an oxygen atom, or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂ ;
R^{f1} is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3;
the sum of k2, l2, and m2 is 3 in the CR^{d1}ₖ₂R^{e1}ₗ₂R^{f1}ₘ₂ unit;
R^{g1} and R^{h1} are each independently at each occurrence - Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂; and
Z⁴ is each independently at each occurrence a single bond, an oxygen atom, or a divalent organic group,
provided that in the formulae (S1), (S2), (S3), (S4), and (S5), at least one Si atom to which a hydroxyl group or a hydrolyzable group is bonded is present.

8. The surface-treating agent according to any one of claims 1 to 7, wherein
R^{S1} and R^{S2} are each independently at each occurrence a group represented by the following formula (S1), (S3), (S4), or (S5): 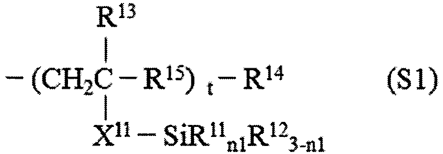
- SiR^{a1}ₖ₁R^{b1}ₗ₁R^{c1}ₘ₁ (S3)
- CR^{d1}ₖ₂R^{e1}ₗ₂R^{f1}ₘ₂ (S4)
- NR^{g1}R^{h1} (S3)
wherein
R¹¹ is each independently at each occurrence a hydroxyl group or a hydrolyzable group;
R¹² is each independently at each occurrence a hydrogen atom or a monovalent organic group;
n1 is each independently an integer of 0 to 3 for each (SiR¹¹ₙ₁R¹²₃₋ₙ₁) unit;
X¹¹ is each independently at each occurrence a single bond or a divalent organic group;
R¹³ is each independently at each occurrence a hydrogen atom or a monovalent organic group;
R¹⁴ is each independently at each occurrence a hydrogen atom, a halogen atom, or -X¹¹-SiR¹¹ₙ₁R¹²₃₋ₙ₁;
R¹⁵ is each independently at each occurrence a single bond, an oxygen atom, an alkylene group having 1 to 6 carbon atoms, or an alkyleneoxy group having 1 to 6 carbon atoms;
t is each independently at each occurrence an integer of 2 or more;
R^{a1} is each independently at each occurrence -Z¹-SiR²¹ₚ₁R²²_{q1}R²³ᵣ₁ ;
Z¹ is each independently at each occurrence an oxygen atom or a divalent organic group;
R²¹ is each independently at each occurrence -Z^{1'}-SiR^{21'}_{p1'}R^{22'}q_{1'}R^{23'}_{r1'} ;
R²² is each independently at each occurrence a hydroxyl group or a hydrolyzable group;
R²³ is each independently at each occurrence a hydrogen atom or a monovalent organic group;
p1 is each independently at each occurrence an integer of 0 to 3;
q1 is each independently at each occurrence an integer of 0 to 3;
r1 is each independently at each occurrence an integer of 0 to 3;
the sum of p1, q1, and r1 is 3 in the SiR²¹ₚ₁R²²_{q1}R²³ᵣ₁ unit;
Z^{1'} is each independently at each occurrence an oxygen atom or a divalent organic group;
R^{21'} is each independently at each occurrence -Z^{1"}-SiR^{22"}_{q1"}R^{23"}_{r1"} ;
R^{22'} is each independently at each occurrence a hydroxyl group or a hydrolyzable group;
R^{23'} is each independently at each occurrence a hydrogen atom or a monovalent organic group;
p1' is each independently at each occurrence an integer of 0 to 3;
q1' is each independently at each occurrence an integer of 0 to 3;
r1' is each independently at each occurrence an integer of 0 to 3;
the sum of p1', q1', and r1' is 3 in the SiR^{21'}_{p1'}R^{22'}_{q1'}R^{23'}_{r1'} unit;
Z^{1"} is each independently at each occurrence an oxygen atom or a divalent organic group;
R^{22"} is each independently at each occurrence a hydroxyl group or a hydrolyzable group;
R^{23"} is each independently at each occurrence a hydrogen atom or a monovalent organic group;
ql" is each independently at each occurrence an integer of 0 to 3;
rl" is each independently at each occurrence an integer of 0 to 3;
the sum of ql" and rl" is 3 in the SiR^{22"}_{q1"}R^{23"}_{r1"} unit;
R^{b1} is each independently at each occurrence a hydroxyl group or a hydrolyzable group;
R^{c1} is each independently at each occurrence a hydrogen atom or a monovalent organic group;
k1 is each independently at each occurrence an integer of 0 to 3;
l1 is each independently at each occurrence an integer of 0 to 3;
m1 is each independently at each occurrence an integer of 0 to 3;
the sum of k1, l1, and m1 is 3 in the SiR^{a1}ₖ₁R^{b1}ₗ₁R^{c1}ₘ₁ unit;
R^{d1} is each independently at each occurrence -Z²-CR³¹ₚ₂R³²_{q2}R³³ᵣ₂ ;
Z² is each independently at each occurrence a single bond, an oxygen atom, or a divalent organic group;
R³¹ is each independently at each occurrence -Z^{2'}-CR^{32'}_{q2'}R^{33'}_{r2'};
R³² is each independently at each occurrence -Z³-SiR³⁴ₙ₂R³⁵₃₋ₙ₂ ;
R³³ is each independently at each occurrence a hydrogen atom, a hydroxyl group, or a monovalent organic group;
p2 is each independently at each occurrence an integer of 0 to 3;
q2 is each independently at each occurrence an integer of 0 to 3;
r2 is each independently at each occurrence an integer of 0 to 3;
the sum of p2, q2, and r2 is 3 in the SiR³¹ₚ₂R³²_{q2}R³³ᵣ₂ unit;
Z^{2'} is each independently at each occurrence a single bond, an oxygen atom, or a divalent organic group;
R^{32'} is each independently at each occurrence -Z³-SiR³⁴ₙ₂R³⁵₃₋ₙ₂ ;
R^{33'} is each independently at each occurrence a hydrogen atom, a hydroxyl group, or a monovalent organic group;
q2' is each independently at each occurrence an integer of 0 to 3;
r2' is each independently at each occurrence an integer of 0 to 3;
the sum of q2' and r2' is 3 in the SiR^{32'}_{q2'}R^{33'}_{r2'} unit;
Z³ is each independently at each occurrence a single bond, an oxygen atom, or a divalent organic group;
R³⁴ is each independently at each occurrence a hydroxyl group or a hydrolyzable group;
R³⁵ is each independently at each occurrence a hydrogen atom or a monovalent organic group;
n2 is each independently at each occurrence an integer of 0 to 3;
R^{e1} is each independently at each occurrence -Z³-SiR³⁴ₙ₂R³⁵₃₋ₙ₂;
R^{f1} is each independently at each occurrence a hydrogen atom, a hydroxyl group, or a monovalent organic group;
k2 is each independently at each occurrence an integer of 0 to 3;
l2 is each independently at each occurrence an integer of 0 to 3;
m2 is each independently at each occurrence an integer of 0 to 3;
the sum of k2, l2, and m2 is 3 in the CR^{d1}ₖ₂R^{e1}ₗ₂R^{f1}ₘ₂ unit;
R^{g1} and R^{h1} are each independently at each occurrence - Z⁴-SiR¹¹ₙ₁R¹²₃₋ₙ₁, -Z⁴-SiR^{a1}ₖ₁R^{b1}ₗ₁R^{c1}ₘ₁, or -Z⁴-CR^{d1}ₖ₂R^{e1}ₗ₂R^{f1}ₘ₂; and
Z⁴ is each independently at each occurrence a single bond, an oxygen atom, or a divalent organic group,
provided that in the formulae (S1), (S3), (S4), and (S5), at least two Si atoms to which a hydroxyl group or a hydrolyzable group is bonded are present.

9. The surface-treating agent according to any one of claims 1 to 8, wherein each of α, β, and γ is 1.

10. The surface-treating agent according to any one of claims 1 to 9, wherein
X^{A} and X^{B} are each independently a single bond or a group represented by the following formula:
-(R⁵¹)ₚ₅-(X⁵¹)_{q5}-
wherein
R⁵¹ is a single bond, - (CH₂)ₛ₅-, or an o-, m-, or p-phenylene group;
s5 is an integer of 1 to 20;
X⁵¹ is -(X⁵²)ₗ₅-;
X⁵² is each independently at each occurrence a group selected from the group consisting of -O-, -S-, an o-, m-, or p-phenylene group, -CO-, -C(O)O-, -Si(R^{S3})₂-, - (Si(R⁵³)₂O)ₘ₅-Si(R⁵³)₂-, -CONR⁵⁴-, -O-CONR⁵⁴-, -NR⁵⁴-, and - (CH₂)ₙ₅- ;
R⁵³ is each independently at each occurrence a monovalent organic group;
R⁵⁴ is each independently at each occurrence a hydrogen atom or a monovalent organic group;
m5 is each independently at each occurrence an integer of 1 to 100;
n5 is each independently at each occurrence an integer of 1 to 20;
l5 is an integer of 1 to 10;
p5 is 0 or 1; and
q5 is 0 or 1,
where at least one of p5 and q5 is 1, and the occurrence order of the respective repeating units enclosed in parentheses provided with p5 or q5 is not limited.

11. The surface-treating agent according to any one of claims 1 to 10, wherein a content of the fluoropolyether group-containing silane compound (A) is 50 mol% or more based on the total of the fluoropolyether group-containing silane compound (A) and the fluoropolyether group-containing silane compound (B).

12. The surface-treating agent according to any one of claims 1 to 11, which is used as an antifouling coating agent or a waterproof coating agent.

13. The surface-treating agent according to any one of claims 1 to 12, which is for wet coating.

14. An article comprising a substrate and a layer on the substrate, the layer being formed of the surface-treating agent according to any one of claims 1 to 13.

15. The article according to claim 14, which is an optical member.
